(19) Europäisches Patentamt
European Patent Office
Office européen des brevets

(11) **EP 1 581 825 B1**

(12) **EUROPEAN PATENT SPECIFICATION**

(45) Date of publication and mention of the grant of the patent:
**16.12.2009 Bulletin 2009/51**

(21) Application number: **04700846.1**

(22) Date of filing: **08.01.2004**

(51) Int Cl.:
***G01V 1/48*** *(2006.01)*

(86) International application number:
**PCT/US2004/000301**

(87) International publication number:
**WO 2004/063772 (29.07.2004 Gazette 2004/31)**

(54) **METHOD AND APPARATUS FOR LWD SHEAR VELOCITY MEASUREMENT**

VERFAHREN UND VORRICHTUNG ZUR LWD-SCHERGESCHWINDIGKEITSMESSUNG

PROCEDE ET APPAREIL POUR MESURE DE VITESSE DE CISAILLEMENT PENDANT L'APPLICATION D'UNE TECHNIQUE LWD

(84) Designated Contracting States:
**DE IT NL**

(30) Priority: **09.01.2003 US 438932 P**
**11.04.2003 US 462358 P**

(43) Date of publication of application:
**05.10.2005 Bulletin 2005/40**

(73) Proprietor: **BAKER HUGHES INCORPORATED**
**Houston, TX 77019-2118 (US)**

(72) Inventors:
- **TANG, Xiao, Ming**
  **Sugar Land, TX 77479 (US)**
- **PATTERSON, Douglas**
  **Spring, TX 77379 (US)**
- **WANG, Tsili**
  **Katy, TX 77450 (US)**
- **LEGGETT, James, V., III**
  **Houston, TX 77066 (US)**
- **DUBINSKY, Vladimir**
  **Houston, TX 77064 (US)**

(74) Representative: **Finck, Dieter et al**
**v. Füner Ebbinghaus Finck Hano**
**Mariahilfplatz 2 - 3**
**81541 München (DE)**

(56) References cited:
**US-A- 4 633 449** **US-A1- 2002 113 717**
**US-A1- 2003 002 388** **US-B1- 6 427 124**

- **KIMBALL C V: "Shear slowness measurement by dispersive processing of the borehole flexural mode" GEOPHYSICS, MARCH-APRIL 1998, SOC. EXPLORATION GEOPHYSICISTS, USA, vol. 63, no. 2, pages 337-344, XP002284422 ISSN: 0016-8033 cited in the application**
- **NORRIS A N: "THE SPEED OF A TUBE WAVE" JOURNAL OF THE ACOUSTICAL SOCIETY OF AMERICA, AMERICAN INSTITUTE OF PHYSICS. NEW YORK, US, vol. 87, no. 1, 1990, pages 414-417, XP000115362 ISSN: 0001-4966**

EP 1 581 825 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### FIELD OF THE INVENTION

This invention generally relates to a method and apparatus for measuring and processing a characteristic of subsurface earth formations penetrated by a borehole. More specifically this invention relates to a method and apparatus for measuring and processing an acoustic characteristic such as formation shear wave velocity of subsurface sonic waves after these waves traverse earth formations adjoining a borehole or passing through a portion of the subsurface.

### BACKGROUND OF THE INVENTION

To obtain hydrocarbons such as oil and gas, wellbores (also referred to as the boreholes) are drilled by rotating a drill bit attached at the end of a drilling assembly generally referred to as the "bottom hole assembly" (BHA) or the "drilling assembly." The wellbore path of such wells is carefully planned prior to drilling such wellbores utilizing seismic maps of the earth's subsurface and well data from previously drilled wellbores in the associated oil fields. Due to the very high cost of drilling such wellbores and the need to minimize time actually spent drilling and wireline logging wells, it is essential to gain as much information as possible during drilling of the wellbores. Information about downhole conditions and materials may be acquired with wireline tools or bottom hole assemblies (BHA). Wireline tools are generally used after a wellbore is drilled, bottom hole assemblies may be used while the well is being drilled as part of the drilling string. Downhole wellbore information acquired from BHA components may be utilized, among other things, to monitor and adjust the drilling direction of the wellbores or to detect the presence of geologic formations and hydrocarbons.

In logging while drilling through an earth formation, it is desirable to measure formation shear wave velocity. The shear wave velocity of earth formations provides information important for exploration and production of oil and gas from the formation. The shear wave velocity profile enables the conversion of seismic shear wave time sections to depth sections and is utilized in the interpretation of seismic wave amplitude variation versus detector offset. The ratio between the shear wave velocity and the compressional wave velocity is closely related to the rock lithology and is related to hydrocarbon saturation. Shear wave velocity is also used to evaluate the mechanical properties of the formation in reservoir engineering applications.

Because of the importance of earth formation shear velocity, various methods have been developed to measure it. In conventional wireline logging using a monopole acoustic tool, the shear velocity can be measured from the shear wave refracted along the borehole wall if the formation shear wave velocity is greater than the borehole fluid acoustic velocity. A formation that has a shear wave velocity faster than the borehole fluid is called a 'fast formation.' However, in a formation where the shear velocity is slower than borehole fluid velocity, a 'slow formation,' the shear wave can no longer refract along the borehole wall, and the shear velocity cannot be directly measured from monopole logging. Because of the need to measure shear velocity in slow formations, especially in the soft sediments of deep-water reservoirs, dipole acoustic logging tools were developed. The dipole tool induces and measures the bending or flexural wave motion in the formation. In a sufficiently low frequency range (1-3 kHz), the flexural wave travels at the shear velocity of the formation, regardless whether the formation is fast or slow. This allows for direct measurement of formation shear velocity using the dipole acoustic tool. Dipole acoustic logging is now a mature technology with worldwide commercial applications.

An alternative technique for shear wave velocity measurement is using the quadrupole shear waves. A quadrupole acoustic tool induces and measures the quadrupole shear wave in the formation. The low-frequency portion of the wave travels at the formation shear wave velocity, allowing for direct shear velocity measurement from the quadrupole wave. Although the quadrupole shear wave has been extensively studied theoretically and a wireline quadrupole-logging tool was also proposed (in US Patent No. 5,027,331 to Winbow et al.), this technology has not yet been commercially applied to the oil and gas industry. This is largely because the wide acceptance and success of the dipole shear wave technology have fulfilled the needs for measuring shear velocity in slow formations.

The acoustic Logging-While-Drilling (LWD) technology has been developed in recent years out of the needs for saving rig-time and for real-time applications such as geosteering and pore pressure determination, among others. The LWD acoustic technology is aimed at measuring the compressional- and shear-wave velocities of an earth formation during drilling. This technology has been successful in the measurement of compressional wave velocity of earth formations. The need for determining the shear wave velocity in slow formations calls for further development of the technology for shear wave measurement capability. Because of the popularity and success of the dipole shear wave technology in wireline logging, this technology is naturally extended to the LWD situation and a LWD dipole acoustic tool has been built and offered for commercial applications.

The application of the dipole acoustic technology to LWD has a serious drawback caused by the presence of the drilling collar with BHA that occupies a large part of the borehole. The drawback is that the formation dipole shear wave traveling along the borehole is severely contaminated by the dipole wave traveling in the collar.

US 2003/0002388 A1 discloses an acoustic tool comprising an acoustic source, an array of acoustic receivers, and an internal controller. The acoustic source excites waves that propagate in a quadrupole mode. The internal controller processes signals from the array of acoustic receivers to determine a peak phase semblance having a slowness value that varies with frequency. The minimum slowness value associated with the peak phase semblance provides an estimation of the shear wave propagation slowness. The acoustic source includes four source elements being driven in inverse-phase to obtain the quadrupole excitation pattern.

United States Patent Application Ser. No. 10/045,263 of Tang et al" having the same assignee as the present application teaches the use of quadrupole LWD tool for determination of shear velocities of earth formations. The advantage, as taught in *Tang,* is that the quadrupole wave, when excited at low frequencies, travels at the formation shear velocity and is free of the tool (quadrupole) wave contamination. The LWD quadrupole waves, however, can be quite dispersive. The typical dispersion characteristic is that, as frequency increases, the quadrupole velocity departs from the value of formation shear velocity and monotonically decreases with frequency. The degree of dispersion, or the departure from the formation shear velocity, of the measured quadrupole wave velocity depends on the measurement frequency range, drilling mud used, and drill collar and borehole sizes. When there is a significant dispersion effect in the measured data, a dispersion correction procedure is needed.

Shear wave velocity measurements have also been used for determination of azimuthal anisotropy in earth formations. Such azimuthal anisotropy may be indicative of stress distributions in the earth or of fracturing in the earth. In either case, knowledge of the anisotropy is important for reservoir development. US Patent 4,832,148 to Becker et al. teaches the use of cross-dipole acoustic logging for determination of the direction and extent of azimuthal anisotropy. Such cross-dipole measurements are commonly referred to as 4C (for four component) data, the four components being called *xx, xy, yx,* and *yy.* The first and second letters refer to the source and receiver orientation respectively in a Cartesian system wherein the z- axis is vertical (or perpendicular to bedding).

For example, xy means emitting a dipole wave from the x-direction source and recording the wave using the y-direction dipole receiver. This indicates that the dipole measurement is a directional measurement and that is why it allows for measuring azimuthal shear velocity changes of the formation. The 4C measurement logging, is now a mature technology in wireline logging. The LWD 4C dipole measurement, however, has two important issues that must be solved. The first is that the LWD dipole, as discussed above, does not directly measure formation shear velocity because of the drill-collar interference. The second is that the rotation of the tool during drilling obscures the directionality of the dipole measurement. (Because of the drill-bit rotation, the dipole source/receiver does not point to a fixed azimuth.)

There is a need for a method of determination of shear wave velocities of earth formations that is relatively robust in the presence of tool mode waves propagating along the drill collar. The need is particularly acute in situations where the formation shear velocity is less than the velocity of propagation of compressional waves in borehole fluids. There is also a need to determine the shear-wave anisotropy azimuthal with respect to the borehole, as this information is important for detecting formation fracture system and characterizing ambient stress field. Such an invention should account for the dispersive nature of the acoustic signals in the LWD environment. Such an invention should also preferably be able to determine azimuthal anisotropy in LWD measurements. It is further desirable that such a method should account for the presence of a drill collar within the borehole, the type of drilling mud used, the size of the borehole, and eccentricity of the logging tool within the borehole. The present invention satisfies this need.

## SUMMARY OF THE INVENTION

The present invention is a method according to claim 1 and apparatus according to claim 17 for using an acoustic logging tool conveyed in a borehole in an earth formation for determining a formation shear velocity. The logging tool has at least one source and a plurality of receivers. The source and receivers generate and receive quadrupole wave data. The quadrupole wave data are dispersive. A slowness of the array quadrupole wave data is obtained. Using a measured slowness of the array quadrupole wave data and other known parameters of the logging tool, borehole and borehole fluid, the slowness is estimated and compared to the actual measured slowness. The formation shear velocity (slowness) is altered until a match is obtained. The diameter of the borehole may be obtained using a suitable caliper device.

The estimation of formation slowness that would be measured with a quadrupole array tool is based on a weighted spectral averaging of the dispersion relation for the quadrupole wave for specified values of the tool, borehole, and borehole parameters based on a selected value of the formation shear wave slowness.

When the formation is azimuthally anisotropic, the quadrupole array data is responsive primarily to the slow shear wave velocity. For such an azimuthally anisotropic formation, in an optional embodiment of the invention, cross-dipole (4C) shear data are also be obtained. During rotation of the logging tool in a logging while drilling environment, orientation sensors on the tool are used to monitor the toolface angle. Using the measured toolface angle, the cross-dipole data are rotated to a fixed coordinate system. Prior art methods are used to determine the principal direction of azimuthal anisotropy from the cross-dipole data in the fixed coordinate system. The cross-dipole data are then rotated

to the principal directions. Subsequent processing of the quadrupole data and the cross-dipole data in the principal direction using a weighted spectral averaging makes it possible to recover the magnitude of the azimutal anisotropy of the formation.

## BRIEF DESCRIPTION OF THE DRAWING

The novel features which are believed to be characteristic of the invention, both as to organization and methods of operation, together with the objects and advantages thereof, will be better understood from the following detailed description and the drawings wherein the invention is illustrated by way of example for the purpose of illustration and description only and are not intended as a definition of the limits of the invention, and wherein:

FIG. 1A shows a schematic diagram of a drilling system that employs the apparatus of the current invention in a logging-while-drilling (LWD) embodiment;

FIG. 1B illustrates a LWD tool on a drill collar;

FIG. 2 illustrates velocity dispersion curves for formation and drill-collar dipole modes;

FIG. 3 illustrates dipole acoustic waveforms in the presence of a drilling collar;

FIG. 4A shows is a schematic illustration of the field for a quadrupole wave;

FIG. 4B illustrates velocity dispersion curves for formation and drill-collar quadrupole modes;

FIG. 5A illustrates wavefield snapshots of acoustic energy near the borehole, where radial particle velocity associated with the quadrupole wave motion is displayed;

FIG. 5B illustrates quadrupole waveforms at various offsets;

FIG. 6A illustrates wavefield snapshots of acoustic energy near the borehole, where radial particle velocity associated with the quadrupole wave motion in a thin-collared pipe is displayed;

FIG. 6B shows time domain displays of the data in Figure 6A;

FIG. 7 is a flow chart of one embodiment of the invention used for obtaining formation shear velocity from quadrupole array data;

FIG. 8 is a flow chart of an embodiment of the invention used for determining fast and slow shear velocities from 4C and quadrupole array data;

FIG. 9 is a schematic illustration of the geometry of a tool in a wellbore;

FIG. 10 shows an example of LWD acoustic modeling for an azimutally anisotropic formation wherein the quadrupole array data from a single transmittershows both the fast and slow shear modes;

FIG. 11 shows results of processing of quadrupole data from a wellbore;

FIG. 12a and 12b show examples of quadrupole waveforms with (a) and without (b) a drill collar;

FIG. 13 shows an example of quadrupole dispersion curves with and without the drill collar;

FIGS. 14a and 14b show examples of quadrupole waveforms at two different operating frequencies: (a) 1.5 kHz and (b) 3 kHz;

FIGS. 15a, 15b and 15c show examples of quadrupole waveforms for eccentering of a tool (a) centralized, (b) in contact with the formation, and (c) half way between;

FIGS 16a, 16b and 16c show quadrupole waveforms for three different borehole sizes: (a) 216 mm (8.5 in), (b) 241

mm (9.5 in), and (c) 311 mm (12.25 in);

FIGS 17a and 17b show the effects of mud weight on the formation quarupole signals (a) 1,05 mg/l (8.8 lb/gal), and (b) 1,92 mg/l (16 lb/gal) ;

FIGS 18a, 18b, 18c and 18d show the effects of borehole inclination to the formation bedding of (a) 0°, (b) 30°, (c) 60° and (d) 90°;

FIGS 19a and 19b shows quadrupole signals for a fast and intermediate formation;

FIGS. 20a and 20b show the effects of transverse isotropy on array signals for two different toolface orientations; and

FIG. 20c shows the two different toolface orientations for the data of Figs. 20a and 20b.

## DETAILED DESCRIPTION OF THE INVENTION

The present invention is a method, system and apparatus for measuring shear wave formation velocities while a well is being drilled. To the extent that the following description is specific to a particular embodiment or a particular use of the invention, this is intended to be illustrative and is not to be construed as limiting the scope of the invention.

**Fig. 1A** shows a schematic diagram of a drilling system **10** having a bottom hole assembly (BHA) or drilling assembly **90** that includes sensors for downhole wellbore condition and location measurements. The BHA **90** is conveyed in a borehole **26**. The drilling system **10** includes a conventional derrick **11** erected on a floor **12** which supports a rotary table **14** that is rotated by a prime mover such as an electric motor (not shown) at a desired rotational speed. The drill string **20** includes a tubing (drill pipe or coiled-tubing) **22** extending downward from the surface into the borehole **26.** A drill bit **50,** attached to the drill string **20** end, disintegrates the geological formations when it is rotated to drill the borehole **26.** The drill string **20** is coupled to a drawworks **30** via a kelly joint **21,** swivel **28** and line **29** through a pulley (not shown). Drawworks **30** is operated to control the weight on bit ("WOB"), which is an important parameter that affects the rate of penetration ("ROP"). A tubing injector **14a** and a reel (not shown) are used instead of the rotary table **14** to inject the BHA into the wellbore when a coiled-tubing is used as the conveying member **22.** The operations of the drawworks **30** and the tubing injector **14a** are known in the art and are thus not described in detail herein.

During drilling, a suitable drilling fluid **31** from a mud pit (source) **32** is circulated under pressure through the drill string **20** by a mud pump **34.** The drilling fluid passes from the mud pump **34** into the drill string **20** via a desurger **36** and the fluid line **38.** The drilling fluid **31** discharges at the borehole bottom **51** through openings in the drill bit **50.** The drilling fluid **31** circulates uphole through the annular space **27** between the drill string **20** and the borehole **26** and returns to the mud pit **32** via a return line **35** and drill-cutting screen **85** that removes the drill cuttings **86** from the returning drilling fluid **31b.** A sensor $S_1$ in line **38** provides information about the fluid flow rate. A surface torque sensor $S_2$ and a sensor $S_3$ associated with the drill string **20** respectively provide information about the torque and the rotational speed of the drill string **20**. Tubing injection speed is determined from the sensor $S_5$, while the sensor $S_6$ provides the hook load of the drill string **20.**

In some applications only rotating the drill pipe **22** rotates the drill bit **50**. However, in many other applications, a downhole motor **55** (mud motor) is disposed in the drilling assembly **90** to rotate the drill bit **50** and the drill pipe **22** is rotated usually to supplement the rotational power, if required, and to effect changes in the drilling direction. In either case, the ROP for a given BHA largely depends on the WOB or the thrust force on the drill bit **50** and its rotational speed.

The mud motor **55** is coupled to the drill bit **50** via a drive disposed in a bearing assembly **57.** The mud motor **55** rotates the drill bit **50** when the drilling fluid **31** passes through the mud motor **55** under pressure. The bearing assembly **57** supports the radial and axial forces of the drill bit **50,** the downthrust of the mud motor **55** and the reactive upward loading from the applied weight on bit. A lower stabilizer **58a** coupled to the bearing assembly **57** acts as a centralizer for the lowermost portion of the drill string **20.**

A surface control unit or processor **40** receives signals from the downhole sensors and devices via a sensor **43** placed in the fluid line **38** and signals from sensors $S_1$-$S_6$ and other sensors used in the system **10** and processes such signals according to programmed instructions provided to the surface control unit **40.** The surface control unit **40** displays desired drilling parameters and other information on a display/monitor **42** that is utilized by an operator to control the drilling operations. The surface control unit **40** contains a computer, memory for storing data, recorder for recording data and other peripherals. The surface control unit **40** also includes a simulation model and processes data according to programmed instructions. The control unit **40** is preferably adapted to activate alarms **44** when certain unsafe or undesirable operating conditions occur.

The BHA may also contain formation evaluation sensors or devices for determining resistivity, density and porosity of the formations surrounding the BHA. A gamma ray device for measuring the gamma ray intensity and other

nuclear and non-nuclear devices used as measurement-while-drilling devices are suitably included in the BHA **90.** As an example, **Figure 1A** shows an example resistivity-measuring device **64** in BHA **90.** It provides signals from which resistivity of the formation near or in front of the drill bit **50** is determined. The resistivity device **64** has transmitting antennae **66a** and **66b** spaced from the receiving antennae **68a** and **68b.** In operation, the transmitted electromagnetic waves are perturbed as they propagate through the formation surrounding the resistivity device **64.** The receiving antennae **68a** and **68b** detect the perturbed waves. Formation resistivity is derived from the phase and amplitude of the detected signals. The detected signals are processed by a downhole computer 70 to determine the resistivity and dielectric values.

An inclinometer **74** and a gamma ray device **76** are suitably placed along the resistivity-measuring device **64** for respectively determining the inclination of the portion of the drill string near the drill bit **50** and the formation gamma ray intensity. Any suitable inclinometer and gamma ray device, however, may be utilized for the purposes of this invention. In addition, position sensors, such as accelerometers, magnetometers or gyroscopic devices may be disposed in the BHA to determine the drill string azimuth, true coordinates and direction in the wellbore **26.** Such devices are known in the art and are not described in detail herein.

In the above-described configuration, the mud motor **55** transfers power to the drill bit **50** via one or more hollow shafts that run through the resistivity-measuring device **64.** The hollow shaft enables the drilling fluid to pass from the mud motor **55** to the drill bit **50.** In an alternate embodiment of the drill string **20,** the mud motor **55** may be coupled below resistivity measuring device **64** or at any other suitable place. The above described resistivity device, gamma ray device and the inclinometer are preferably placed in a common housing that may be coupled to the motor. The devices for measuring formation porosity, permeability and density (collectively designated by numeral **78**) are preferably placed above the mud motor **55.** Such devices are known in the art and are thus not described in any detail.

As noted earlier, a significant portion of the current drilling systems, especially for drilling highly deviated and horizontal wellbores, utilize coiled-tubing for conveying the drilling assembly downhole. In such application a thruster **71** is deployed in the drill string **90** to provide the required force on the drill bit. For the purpose of this invention, the term weight on bit is used to denote the force on the bit applied to the drill bit during the drilling operation, whether applied by adjusting the weight of the drill string or by thrusters. Also, when coiled-tubing is utilized a rotary table does not rotate the tubing; instead it is injected into the wellbore by a suitable injector **14a** while the downhole motor **55** rotates the drill bit 50.

**Fig. 1B** is a schematic view of an acoustic logging while drilling tool system on a BHA drill collar **90** containing a drill bit **50.** This system is mounted on the BHA drill collar **90** for performing acoustic measurements while the formation is being drilled. The acoustic logging while drilling tool system has a source **105** to emit acoustic vibrations **106** that may traverse formation **95** and may also be propagated along the borehole wall and be received by sensors A and B which may be in arrays. These sensors are discussed later in the application. A point to note is that the sensors are disposed between the transmitter and the receiver. This has important benefits in that the desired signal produced by the transmitter travels in a direction opposite to the direction of noise generated by the drillbit **50.** This makes it possible to use suitable filtering techniques, including phased arrays, to greatly reduce the drillbit noise. In an alternate embodiment of the invention, the transmitter **105** may be located between the sensors and the drillbit **50**

The application of the dipole acoustic technology to LWD has a serious drawback caused by the presence of the drilling collar with BHA that occupies a large part of the borehole. The drawback is that the formation dipole shear wave traveling along the borehole is severely contaminated by the dipole wave traveling in the collar.

Discussed first is a summary of the methods used for analysis of wave propagation for a transversely isotropic (TI) medium. For the sake of generality, we consider acoustically anisotropic formations although much of our study was done for isotropic formations. The elastic stiffness tensor of a **TI** medium is given by

15

$$C = \begin{bmatrix} C_{11} & C_{12} & C_{13} & & & \\ & C_{11} & C_{13} & & & \\ & & C_{33} & & & \\ & & & C_{44} & & \\ & & & & C_{44} & \\ & & & & & C_{66} \end{bmatrix} \qquad (1)$$

where $C_{12} = C_{11} - 2C_{66}$. The tensor is symmetric and only half of it is displayed. We assume the borehole makes an angle a with respect to the symmetry axis of the TI medium. Two finite-difference approaches can be used to simulate the wave propagation in a TI medium. In the first method, the model is discretized in the *x*-, *y*-, and *z*-coordinates. In the second method, the model is discretized in a rotated Cartesian coordinates such that the rotated z-axis coincides with the borehole axis. The first method is easier because it does not rotate the TI tensor but is difficult to model the tool body and a deviated well. The second method is able to accurately model the tool body and a deviated well but must rotate the TI tensor. We chose the second approach.

Using the rotation equation

$$\mathbf{C'} = \mathbf{R}\,\mathbf{C}\,\mathbf{R_T}$$

where **R** is the rotation matrix given by

$$R = \begin{bmatrix} \cos^2\alpha & 0 & \sin^2\alpha & \sin 2\alpha & 0 & 0 \\ 0 & 1 & 0 & 0 & 0 & 0 \\ \sin^2\alpha & 0 & \cos^2\alpha & -\sin 2\alpha & 0 & 0 \\ 0 & 0 & 0 & \cos\alpha & 0 & -\sin\alpha \\ -\sin\alpha\cos\alpha & 0 & \sin\alpha\cos\alpha & 0 & \cos 2\alpha & 0 \\ 0 & 0 & 0 & \sin\alpha & 0 & \cos\alpha \end{bmatrix}$$

(2)

the new stiffness tensor becomes

$$C = \begin{bmatrix} C'_{11} & C'_{12} & C'_{13} & & C'_{15} & \\ & C'_{22} & C'_{13} & & C'_{25} & \\ & & C'_{33} & & C'_{35} & \\ & & & C'_{44} & & C'_{46} \\ & & & & C'_{44} & \\ & & & & & C'_{66} \end{bmatrix} \quad 15 \qquad (3)$$

15

In our analysis, the TI medium is defined using $C_{11}$, $C_{66}$, and parameters

$$\varepsilon = \frac{C_{11} - C_{33}}{2C_{66}} \qquad (4)$$

$$\gamma = \frac{C_{66} - C_{44}}{2C_{44}}$$

$$\delta = \frac{(C_{13} + C_{44})^2 - (C_{33} - C_{44})^2}{2C(C_{33} - C_{44})} \quad 5$$

The parameter δ has large variations for sedimentary and crystalline rocks. In some of the modeling results, a special case of δ = ε is chosen. We used a nonuniform finite-difference grid to cover the model differently with smaller grid sizes for the tool body, transmitter and receivers, and borehole and larger grid sizes for the remote formation. The grid size ranges from 6 mm to 12 mm.

First, the dipole wave excitation and propagation characteristics for a borehole with a drilling collar are analyzed. Except where noted otherwise, the results are for a drill collar centered within the borehole. Using known analyses methods, one can calculate the velocity dispersion curve for the formation and collar dipole shear (flexural) waves. The dispersion curve describes the velocity variation of a wave mode with frequency. In the example, the borehole diameter is 23.84 cm and the inner- and outer diameter of the collar is 5.4 and 18 cm. respectively. The inner collar column and the annulus column between the collar and borehole are filled with drilling mud whose acoustic velocity and density are 1,470 m/s and 1 g/cc, respectively. The collar is made of steel (compressional velocity, shear velocity and density of steel are 5,860 m/s, 3,130 m/s, and 7.85 g/cc, respectively). The formation is acoustically slow with compressional velocity of 2,300 m/s, shear velocity 1,000m/s, and density 2 g/cc. It is to be noted that the example is for illustrative purposes only and not intended to be a limitation on the scope of the invention.

The calculated drilling collar and formation flexural wave dispersion curves for dipole modes are shown in **Fig. 2**, for the frequency range shown as the horizontal axis of 0 to 14 kHz. The collar dipole wave dispersion curve **201** displayed along the vertical axis shows how velocity of the collar dipole wave varies with frequency over the range 0 to 14 kHz. The formation dipole wave dispersion curve **203** shows that except for low frequencies in this range, there is relatively little change in velocity. The formation and collar flexural wave modes coexist almost for the entire frequency range, except at the very low frequency where the collar flexural mode appears to terminate at the formation shear velocity. Below the frequency where the collar mode terminates, the formation flexural mode velocity appears to continue the collar flexural mode behavior that would exist in the absence of the formation, the velocity decreasing to zero at the zero frequency. This cross-over phenomenon is caused by the strong acoustic interaction between the collar and the formation in this dipole excitation situation.

Dipole acoustic wave propagation in a borehole with a drilling collar may be simulated with numerical finite difference techniques.
The model parameters are the same as used in the above velocity dispersion calculation example. The dipole source and an array of receivers are placed on the rim of the collar. The source excitation center frequency is 2 kHz. **Fig. 3** shows the simulated dipole acoustic waveforms displayed with time along the horizontal axis. Dipole acoustic waveforms are displayed by offset corresponding to source-receiver distance along the vertical axis in **Fig. 3.** Receiver locations are spaced 0.1524m apart beginning with the near trace waveform at 1.833m **301** to 2.9m **303** offset from the source. The dipole acoustic waveforms are dominated by the collar flexural wave that has a faster velocity and a dispersive character. The initial strong impulses 305 of the dispersive collar flexural wave are followed in time by dispersive energy that is stronger than the flexural wave of interest representing the formation S-wave. The dashed line **335** represents the arrival location and velocity of the formation flexural wave. The formation flexural wave of interest, aligned with line **335,** is smaller in amplitude compared with the collar flexural wave, and is severely contaminated by the interaction of the collar flexural wave.

The above velocity dispersion calculation and wave propagation simulation results demonstrate that there is a strong interaction between formation and drilling collar flexural waves. The fundamental cause of this is that the two wave modes coexist in the same frequency range of interest. There are several drawbacks of the LWD dipole technology for shear velocity measurement. The first is the difficulty in obtaining good quality formation flexural wave measurements in the presence of severe contamination from the collar flexural wave. The collar wave, being a low-frequency mode, is difficult to suppress using attenuation techniques such as cutting grooves and/or inserting absorptive materials in the collar, etc. The second drawback is that the formation flexural wave, even if it could be reliably measured, cannot yield accurate formation shear velocity information because of the collar interaction. As can be seen from **Fig. 2,** the high frequency limit of the collar mode approaches the shear velocity of the collar and at the frequency **205** where the collar dipole mode ceases to exist, the velocity of the collar dipole mode is the formation shear velocity **207.** The velocity **203** of the formation dipole mode is, at all frequencies, below the formation shear velocity **205.** In the absence of a collar, when excited at low frequencies, the formation dipole mode would propagate at a velocity equal to the formation shear velocity. Determination of the formation shear velocity from the dispersion curves of either the formation dipole mode or the collar dipole mode not an easy matter. In addition, during drilling operations, there is a strong dipole mode excited by the drillbit that produces additional noise. For the foregoing reasons, it is difficult, if not impossible, to directly measure formation shear wave velocity using the dipole acoustic technology in the LWD environment.

One manner of deploying certain sensors for LWD shear wave data acquisition, for example in drill string BHA **90** of **Fig. 1A** and **1B** will now be described. The actual BHA utilized for a particular application may contain some or all of the sensors described in the background section, in addition to the present invention. For the purpose of this invention any such BHA could contain one or more seismic sources and receivers (collectively represented herein by numeral **88**) at a suitable location in the BHA **90**.

This invention incorporates a quadrupole acoustic technology for the LWD shear velocity measurement. **Fig. 4a** shows an illustration of a quadrupole field. It shows a characteristic four-lobed pattern that may be substantially characterized by a *cos2*θ azimuthal variation. In the present instance, the field may be associated with particle motion or with pressure. The greatest advantage of using the quadrupole wave is that the collar quadrupole wave exists only above a certain frequency called the cut-off frequency. This frequency depends on the drilling collar thickness and borehole size. Thus, by determining the cut-off frequency for the collar and borehole dimensions, one can select a frequency band in which only the formation quadrupole shear wave is excited. Determining the velocity of the formation quadrupole wave will fulfill the needs for shear wave velocity measurement in the LWD environment. This is different from the situation in wireline logging: while US 5,027,331 does discuss the use of quadrupole logging on a wireline device, there is no discussion of a cutoff frequency of a quadrupole wave. US 5,027,331 teaches a wireline logging device. As would be known to those versed in the art, the tool diameter in wireline devices is typically much smaller than the borehole diameter. Chert has also discussed in Geophysics, vol. 54, N°5 (May 1989), P. 590-597 the use of a quadrupole source for shear wave logging and shows a comparison of experimental results with theoretical dispersion curves for Stoneley waves within the borehole. The tool diameter *Chen's* model is less than half the borehole diameter. As would be known to those versed in the art, Stoneley waves are interface waves propagating along the wall of the borehole. In contrast, the present invention deals with a MWD device wherein the diameter of the drill collar is almost the same as the diameter of the borehole. In such a case, the collar mode becomes important. This collar mode is different from the Stoneley waves discussed in *Chen.*

The feasibility of determining formation shear velocity from quadrupole wave measurement is demonstrated using theoretical/numerical analysis examples. The actual implementation may be done using a downhole processor at any suitable location in the bottom hole assembly. **Fig. 4b** shows the velocity dispersion curves of the formation **401** and collar quadrupole waves **403** and **405.** Velocity in meter per second (m/s) is displayed along the vertical axis and frequency in kilohertz (kHz) along the horizontal axis. The velocity dispersion curve for an exemplary collar of thickness 35mm is shown as curve **403.** The velocity dispersion curve for an exemplary collar of thickness 63mm is shown as curve **405**. The formation quadrupole wave is slightly dispersive and reaches the formation shear wave velocity at a low cut-off frequency (around 2 kHz in this case). This indicates that formation shear wave velocity can be determined as the low frequency limit of the velocity of formation quadrupole waves. The collar quadrupole wave velocity curve shows very high values due to the high shear rigidity (steel) and thick wall (63 mm) of the drilling collar. The collar wave for the 63mm thick collar **405**, however, exists only in the frequency range above 10 kHz; whereas, the required frequency for shear velocity measurement of the formation is around 2 kHz, well separated from the frequency range (> 10 kHz) of the collar wave. This frequency separation allows for designing a method and apparatus to generate quadrupole waves only in a predetermined frequency band (0-10 kHz in this case). In this band, only the formation quadrupole wave is generated. This wave excitation/generation scheme may be demonstrated using finite difference simulations.

In a finite difference modeling, a quadrupole source and an array of receivers with a 0.1524 m. spacing are placed at the rim of the collar. The source wavelet center frequency is chosen to be 2 kHz, the amplitude spectrum of the source wavelet diminishing to zero at about 5 kHz, which is below 10 kHz, the cut-off frequency of the collar quadrupole wave. **Fig. 5a** shows three snapshots in time of the wavefield intensity due to the quadrupole source. Each snapshot, **501, 503,** and **505** is a cross-section displaying a fluid inside the drill collar **521,** the drill collar **90,** fluid **523** outside the drill collar, and a formation **95.** Radial particle velocity associated with the quadrupole wave motion is displayed shaded **507, 509.** These **Fig. 5a** snapshots display the locations of wavefield intensity at several instants of time (0.24 milliseconds for 501, 1.22 milliseconds for **503,** and 2.21 milliseconds for **505,** respectively). In the borehole fluid annulus high wavefield intensity is seen **507** and high wavefield intensity is seen in the formation **509.** The wave motion in the fluid annulus and the motion in the formation are in phase, traveling at the formation shear velocity as demonstrated by the juxtaposition of high wavefield intensity in the fluid **507** and the formation **509** for all three snapshots **501, 503** and **505.** This is the formation quadrupole wave as discussed in connection with **Fig. 4.** There is almost no discernable wave intensity for locations anywhere inside the collar except for the initial time (snapshot 0.24 ms **501**) around the source, showing that the collar quadrupole wave is not excited in this frequency band for this collar thickness (63 mm) (2.48 inches).

The time-domain quadrupole waveforms of the receiver array are displayed in **Fig. 5B** where time is represented along the horizontal axis. Quadrupole acoustic waveforms are displayed by offset corresponding to source-receiver distance along the vertical axis in **Fig. 5B.** Receiver locations are spaced 0.1524m apart beginning with the near trace waveform at 1.833m **531** to 2.9m **533** offset from the source. **Fig. 5B** shows only one wave, the formation quadrupole wave, traveling across the array at the formation shear velocity. The dashed line **535** marks the formation quadrupole wave first arrival. This time-domain wave simulation result is consistent with the frequency domain dispersion analysis result of **Fig. 4.** These examples demonstrate that choosing an appropriate wave excitation frequency band can eliminate collar quadrupole waves.

The excitation frequency band should be selected based on the drilling collar and borehole dimensions. In drilling practice, the size of the borehole is varied to suit exploration/production needs and/or geological environment of the well to be drilled. Accordingly, the size of the drilling collar also varies. The change of the collar and borehole

dimensions, especially the former, will significantly change the collar quadrupole wave characteristics. This, again, can be demonstrated using theoretical/numerical analysis examples. The quadruple dispersion curves for a 35 mm thickness drilling collar (dashed curves) are shown in **Fig. 4.** With the thinner collar, the formation quadrupole dispersion curve (dashed line 403) is also changed. The cut-off frequency of the formation mode is raised to about 3 kHz and the whole curve exhibits higher values compared to the thick collar case (solid curve **405**). The curve approaches the formation shear wave velocity at low frequencies. On the other hand, the collar quadrupole wave velocity is much reduced compared to the thick collar case (solid curve 405) and shows a much lower cut-off frequency (about 6 kHz). The general trend shown in Figure 4 is that increasing the collar thickness will move the frequency band of the collar quadrupole wave away from that of the formation quadrupole wave. When the frequency band of the collar quadrupole wave is close to that of the formation quadrupole, measurement of the formation quadrupole wave will be severely impaired, as the following wave simulation example demonstrates.

The example case is where the collar pipe is relatively thin (thickness is only 16 mm or 0.63 inches). The cut-off frequency of the collar quadrupole wave is now about 3.5 kHz. Other parameters, as used in the simulation of **Fig. 5B,** are kept unchanged. With the 2 kHz center excitation frequency, both formation and collar quadrupole waves are excited. **Fig. 6A** is the counterpart of **Fig. 5A,** showing the wavefield snapshots for the 16mm thick collar case. **Fig. 6A** shows three snapshots in time of the wavefield intensity due to the quadrupole source. Each snapshot, **601, 603,** and **605** is a cross-section displaying a fluid **621** inside the drill collar, drill collar **90,** fluid **625** outside the drill collar, and a formation **95**. Radial particle velocity associated with the quadrupole wave motion is displayed shaded **611, 613.** These **Fig, 6A** snapshots display the locations of wavefield intensity at several instants of time (0.24 milliseconds for **601**, 1.22 milliseconds for **603,** and 2.21 milliseconds for **605,** respectively). In the borehole fluid **625** annulus high wavefield intensity is seen **611** and high wavefield intensity is seen in the collar **613.** For all the three time instants **601, 603** and **605,** the wavefield intensity in the entire borehole containing the collar is dominated by the collar quadrupole wave. Formation quadrupole wave is weakly excited, which is out of phase with the collar wave.

The time domain array waveforms are shown in **Fig. 6B**. The time-domain quadrupole waveforms of the receiver array are displayed in **Fig. 6B** where time is represented along the horizontal axis. Quadrupole acoustic waveforms are displayed by offset corresponding to source-receiver distance along the vertical axis in **Fig. 6B**. Receiver locations are spaced 0.1524m apart beginning with the near trace waveform at 1.833m **631** to 2.9m **633** offset from the source. The time domain waveforms are dominated by the collar quadrupole wave that has a moveout velocity of about 1,300 m/s. The dashed line **635** represents the arrival time for the formation quadrupole wave. In this case, it is difficult to measure the formation quadrupole wave in the presence of the strong collar wave. This example demonstrates the importance of the frequency band selection for the LWD quadrupole wave generation and measurement devices.

Conventional processing of array sonic data is based on semblance measurements of time domain data recorded by an array. Commonly, a semblance is determined in the slowness-time domain of the array data to obtain the velocity of propagation of a wave. Implicit in the processing is the assumption that the propagation velocity is non-dispersive. We digress briefly to derive an important theoretical result relating the semblance time coherency (STC) to the characteristics of the dispersion curve itself.

We start with an important result, obtained by US 5,278,805 which expresses the relationship between the time domain and frequency domain semblance

$$\bar{\rho}(\bar{S},T_{ar}) = \frac{\int_{\omega=-\infty}^{\infty} \bar{\rho}^{*}\left[u\left(\bar{S},\omega\right)\right]\left|A(\omega)\right|^{2} d\omega}{\int_{\omega=-\infty}^{\infty} \left|A(\omega)\right|^{2} d\omega} \qquad (5)$$

where

$$\bar{\rho}^{*}\left[u\left(\bar{S},\omega\right)\right] = \frac{1}{m^{2}}\left[\frac{\sin^{2}(mu)}{\sin^{2}(u)}\right] \qquad (6)$$

and

$$u = \frac{\omega\left[S\left(\omega,S^*\right) - \bar{S}\right]\delta}{2} \qquad (7).$$

The left-hand side in **eq. (5)** represents the time domain semblance function evaluated at the earliest arrival time (over the array), $T_{ar}$, of the mode of interest, at arbitrary slowness.

**Eq. (5)** expresses the fact that the time domain semblance $\bar{\rho}$ is a spectral weighted average of the frequency domain semblance $\bar{\rho}^*$, weighted by the wave's power spectrum $|A(\omega)|^2$. Apart from the angular frequency, $\omega$, the frequency domain semblance $\bar{\rho}^*$ is parametrized by the total number of receivers (in the array), $m$ in **eq. (6)**, the inter-receiver spacing, $\delta$ in **eq. (7),** and the slowness dispersion function, $S(T,S^*)$ of the mode of interest. The slowness dispersion function is parametrized by the 'true' formation shear slowness, $S^*$. It is easily shown that is sharply peaked at $u = \pm n\pi$, $(n = 0, 1, 2 ...)$. Of all these peaks the peak at $u = 0$ dominates the contributions to **eq. (5)**, assuming that is bandlimited to the frequency range of interest for the logging (dipole or quadrupole, as the case may be).

To obtain the slowness, that maximizes the semblance function cf. **eq. (5)**, we now proceed to find this (in case of dispersive wave propagation) by setting , i.e.,

$$\frac{\partial\bar{\rho}^*}{\partial S} = \frac{\int_{\omega=-\infty}^{\infty} \frac{\partial\bar{\rho}^*}{\partial u}\frac{\partial}{\partial S}\left|A(\omega)\right|^2 d\omega}{\int_{\omega=-\infty}^{\infty} \left|A(\omega)\right|^2 d\omega} = 0 \qquad (8)$$

Because the contribution to **eq. (1)**, and consequently equation **eq. (8)**, comes predominantly from $u = 0$, we only need to retain the leading order of $\frac{\partial\bar{\rho}^*}{\partial u}$ in the vicinity of $u = 0$ in **eq. (4)**, i.e., This yields the result

$$\bar{S} = \frac{\int_{\omega=-\infty}^{\infty} S(\omega,S^*)\omega^2\left|A(\omega)\right|^2 d\omega}{\int_{\omega=-\infty}^{\infty} \omega^2\left|A(\omega)\right|^2 d\omega} \qquad (9)$$

**Eq. (9)** states an important new result: The slowness value $\bar{S}$, as obtained by applying semblance (a non-dispersive time domain method) to dispersive array waveforms, is the weighted spectral average of the slowness dispersion function $S(\omega,S^*)$ The weighting function is given by $\omega^2\,|A(\omega)|^2$. This slowness is therefore designated as "*centroid phase slowness* ", centroid with respect to the wave's power spectrum $A(\omega)^2$ multiplied by $\omega^2$. **Eq. (9)** states that the moveout slowness (or velocity) of a dispersive wave, as obtained from a non-dispersive time-domain array processing method (e.g., semblance), is a weighted spectral average of the wave's dispersion curve. Although **eq. (9)** is obtained assuming an infinite time window length, the concept of spectral weighting, as stated in **eq. (9)** can be extended to situations where a finite window length is used.

In the actual semblance processing of array waveform data, the window length normally includes only one or two cycles of the waveform. Consequently, the assumption of the infinite window length, as required to derive **eq. (9)** is violated. This means that in this situation the theoretical result of **eq. (9)** may not be directly applicable. Nevertheless, the same spectral weighting concept, as stated in **eq. (9)** can still be used. Taking the entire dispersive wavetrain, as in

the derivation of **eq. (9)** results in weighting the slowness dispersion curve $S(\omega, S^*)$ towards higher frequency, as can be seen from the weighting function $\omega^2 |A(\omega)|^2$. This suggests that the weighting function can be modified to accommodate the effects of using a shorter processing window length. For instance, if we window the first arrival part of the dipole-shear wave data, which is usually of lower frequency and faster velocity, then some 'effective' weighting function can be used to replace $\omega^2 |A(\omega)|^2$. This function should weight $S(\omega, S^*)$ towards the lower frequency range. For example, we can use $A(\omega)$ Instead of $\omega^2 |A(\omega)|^2$ or some other empirical forms that fit the data. The importance of **eq. (9)** in acoustic logging is that it provides a simple method for correcting the dispersion effect for the shear slowness estimation from any dispersive acoustic wave data and is equally applicable to dipole and quadrupole data. Based on **eq. (9)**, a dispersion correction is applied in the present invention to quadrupole and dipole data.

In one embodiment of the invention, dispersive quadrupole acoustic data are used for obtaining the formation shear velocity. The flow chart for the invention is given in **Fig. 7**. Quadrupole acoustic data are acquired (see **Figs. 5B** and **6B** for example), and processed using semblance methods to obtain a slowness $S^*$ **701**. Examples of suitable methods of semblance processing are given in, for example, US Patents 6,023,443 and 6,427,124 to Dubinsky et al, having the same assignee as the present invention. The quadrupole wave spectrum $A(\omega)$ is determined for a suitable trace in the array, such as the first trace, and the denominator of **eq. (9)** is determined **703**. For a trial shear wave velocity, $Vs$, a slowness dispersion curve $S(\omega, S^*)$ is determined **705**. Determination of the dispersion function requires knowledge of the size and modulus of the logging tool, the borehole radius, the mud density in the borehole, the acoustic velocity in the mud, and the rigidity of the logging tool. From the dispersion slowness, the numerator of right hand side of **eq. (9)** is calculated **707.** The ratio of the numerator and the denominator gives a weighted spectral average slowness. This is compared to the measured slowness from **701** to see if **eq. (9)** is satisfied. If the equation is satisfied, the formation shear velocity is equal to the trial velocity in **705** and the process stops **711.** If **eq. (9)** is not satisfied, then a new shear velocity of the formation is selected **713** and the process is repeated until the formation shear velocity has been determined.

The drilling fluid property can have an important influence on the LWD quadrupole-wave dispersion characteristics. A calibration procedure can be utilized to determine the fluid property, which is specified by the drilling fluid velocity $V_f$. (Drilling fluid density is often known). For a formation interval of known shear velocity **eq. (5)** can be used to determine the fluid velocity $V_f$. For example, if the formation interval in the entire logged depths is a fast formation (shear velocity greater than $V_f$), the interval's shear velocity can be directly measured by the quadrupole wave using the method disclosed in *Tang*'263 application. The only unknown parameter is the drilling fluid velocity $V_f$. The calibration procedure is essentially adjusting the value of $V_f$ in the dispersion equation till the following equation is satisfied:

$$S^* = \frac{\int_{\omega=-\infty}^{\infty} S(\omega, V_f)\omega^2 A^2(\omega)d\omega}{\int_{\omega=-\infty}^{\infty} \omega^2 A^2(\omega)d\omega} \quad (10)$$

Once the fluid property is specified from calibration, it is used in the dispersion equation (5) to calculate the quadrupole-wave dispersion curve for the dispersion correction and $V_s$ estimation. An alternate method for determining $V_f$ is disclosed in US Patent Application Ser. No. 10/298,706 of Kurkoski et al, having the same assignee as the present application.

Another embodiment of the present invention uses quadrupole acoustic data in combination conjunction with cross dipole data (4C data) to determine the direction and extent of azimuthal anisotropy in the earth formation. The dipole-orientation problem caused by tool rotation can be solved by recording the high side HS toolface angle $T$ (in Figure 9 this angle is denoted by $T$.) of the rotating tool The angle HS can be derived from magnetometer measurements in combination with other survey data, such as that obtained using a gyroscope, accelerometer, or magnetometers The acquired data can be converted to a coordinate system fixed with reference to the borehole. Changes in the borehole inclination or azimuth usually are small in comparison to the time scale at which the acoustic measurements are made. This is possible because, compared to the time period (~0.1 - 1s; typically 0.5 s) of one complete drill bit rotation, the transit time of a dipole acoustic signal from source to receiver is very short (< 0.01 s; typically 0.002 to 0.005 s). Furthermore, in alternate embodiments of the invention, the acquired data in the borehole coordinates can be converted, even when the data are still in the downhole acquisition system, to a fixed coordinate system (e.g., ., the earth coordinates) through a coordinate transformation. This gives a 4C data set in the earth coordinates. Alternatively, the data may be converted to a formation coordinate system based on measurements of the formation dip angle and strike direction. All

of these coordinate transformations are well known in the art. For the purposes of this invention, all that is necessary is to transform to a fixed coordinate system.

The geometry of a tool in a borehole is illustrated in **Fig. 9**. The tool z-axis (and the axis of the borehole) are denoted by **915.** A horizontal plane intersecting the borehole is denoted by **911.** A cross section of the borehole and the tool perpendicular to the z- axis is denoted by **913.** The inclination of the borehole is given by **I** and a high side toolface is defined by **909.** The high side (HS) angle between the x- axis of the tool and the high side is given by **T.** The borehole azimuth with respect to north is denoted by the angle **A.**

Denoting by XX, XY, YX and YY the four components of data recorded in a fixed coordinate system, the azimuth of the fast shear polarization 2 relative to the fixed coordinate system can be found by minimizing the energy of the cross-components:

$$E(\theta) = \int_T [X'Y'(\theta,t)]^2\, dt + \int_T [Y'X'(\theta,t)]^2\, dt \qquad (11)$$

where $T$ is the time duration of the dipole signal, $\theta$ is the angle between the fixed coordinate system and the coordinate system defining the principal directions of azimuthal anisotropy, and

$$\begin{aligned} X'Y' &= (XX - YY)\cos\theta\sin\theta + XY\cos^2\theta - YX\sin^2\theta \\ Y'X' &= (XX - YY)\cos\theta\sin\theta + YX\cos^2\theta - XY\sin^2\theta \end{aligned} \qquad (12)$$

are the cross component data in the principal coordinate system. It is thus clear that the four-component LWD dipole data obtained from the above procedure can determine the azimuth, $\theta$, of the anisotropy. The magnitude of the anisotropy, however, must be determined by the (fast and slow) dipole signals in the two principal directions. With the $\theta$ -value determined from **eq. (7)**, the principal dipole signals are obtained:

$$\begin{aligned} X'X' &= XX\cos^2\theta - (XY + YX)\cos\theta\sin\theta + YY\sin^2\theta \\ Y'Y' &= YY\cos^2\theta + (XY + YX)\cos\theta\sin\theta + XX\sin^2\theta \end{aligned} \qquad (13)$$

The calculation is done for all receivers in an acoustic receiver array. Then the propagation slowness for the above two signals can be determined by respectively processing the two array data sets. The signal with a smaller propagation slowness $S_1$* (faster velocity) is the fast principal dipole signal, denoted by FP, and the other one is the slow principal dipole signal, denoted by *SP,* with a slowness $S_2$*. The difference, $\delta S = S_2^* - S_1^*$, between the two slowness values is caused by the anisotropy and can be used to determine the anisotropy magnitude.

Next, we address the issue of dispersion of LWD dipole measurement. As discussed above with respect to the LWD quadrupole measurement, the LWD dipole also does not yield the direct measurement of formation shear. Because of the severe interference of the drill collar, the dipole-wave velocity is significantly below the formation shear velocity value. Although the dipole-wave phase slowness dispersion curve, $S(\omega)$, which is sensitive to the formation shear-wave velocity, can be used to indirectly infer the formation shear velocity, the problem is aggravated by the fact that one now needs to determine two unknowns, the fast and slow shear velocities $V_1$ and $V_2$. In addition, the LWD system, i.e., drill collar and borehole size, drilling fluid property, and tool decentralization, etc., can significantly affect the dipole-wave dispersion characteristics. The measured fast and slow shear slowness, $S_1$* and $S_2$*, according to the weighted spectral average slowness method discussed above with reference to quadrupole dispersion, are now respectively given by

$$S_1^* = \frac{\int_{-\infty}^{\infty} S_1(\omega,V_1,V_2,SYS)[FP(\omega)]^2\,d\omega}{\int_{-\infty}^{\infty}[\omega FP(\omega)]^2\,d\omega} \tag{14}$$

$$S_2^* = \frac{\int_{-\infty}^{\infty} S_1(\omega,V_1,V_2,SYS)[SP(\omega)]^2\,d\omega}{\int_{-\infty}^{\infty}[\omega SP(\omega)]^2\,d\omega}$$

where $S_1(\omega,V_1,V_2,SYS)$ and $S_2(\omega,V_1,V_2,SYS)$ are the dipole phase slowness dispersion curves in the fast and slow polarization directions, respectively. The dispersion curves are parametrized by the fast and slow shear velocities $V_1$ and $V_2$. The curves are also significantly influenced by the LWD system, denoted by the symbol, *SYS.* Without specifying the parameter(s) in the LWD system, it is difficult to estimate the shear velocities $V_1$ and $V_2$. Specifically, the drilling mud property (density and acoustic velocity) can significantly influence the dipole-wave dispersion characteristics.

The quadrupole shear measurement provides additional information to help solve the problem. The measured quadrupole slowness, $S_q^*$ is given by

$$S_q^* = \frac{\int_{-\infty}^{\infty} S_q(\omega,V_1,V_2,SYS)[\omega Q(\omega)]^2\,d\omega}{\int_{-\infty}^{\infty}[\omega Q(\omega)]^2\,d\omega} \tag{15}$$

where $S_q(\omega,V_1,V_2,SYS)$ is the quadrupole-wave phase slowness dispersion curve as a function of the fast and slow shear velocities $V_1$ and $V_2$ and the LWD system, *SYS;* $Q(\omega)$ is the quadrupole wave spectrum. With the three measurements given by **eqs. (14)** and **(15)**, it is now mathematically possible to calibrate the LWD system, *SYS,* and determine the velocities $V_1$ and $V_2$.

The system given by **eqs. (14)** and **(15)**) can be simplified for small to moderate anisotropy situations. As would be known to those versed in the art, for most cases of interest in well logging, the azimuthal anisotropy is less than 0.2 For small anisotropy, the following approximations are applicable:

$$\begin{aligned} &FP(\omega) \approx SP(\omega) = A(\omega) \\ &S_2(\omega,V_1,V_2) \approx S(\omega,V_2) \\ &S_1(\omega,V) \approx S_2(\omega,V) + \frac{\partial S_2(\omega,V)}{\partial V_2}\delta V \end{aligned} \tag{16}$$

where $\delta V = V_1 - V_2$ is the difference between the fast and slow shear velocities. Furthermore, theoretical modeling indicates that a quadrupole wave in an azimuthally anisotropic formation is dominated by a slow quadrupole wave (see

Figure 10) and therefore primarily measures the slow shear velocity $V_2$ (*Ellefsen,* 1990). This result, together with the above approximations, yields the following two equations to determine the anisotropy magnitude.

$$S_2^* = \frac{\int_{-\infty}^{\infty} S_2(\omega, V_2, SYS)\left[\omega A(\omega)\right]^2 d\omega}{\int_{-\infty}^{\infty}\left[\omega A(\omega)\right]^2 d\omega} \tag{17}$$

$$\delta V = \frac{(S_2^* - S_1^*)\int_{-\infty}^{\infty}\left[\omega A(\omega)\right]^2 d\omega}{\int_{-\infty}^{\infty}\frac{\partial S(\omega, V_2, SYS)}{\partial V_2}\left[\omega A(\omega)\right]^2 d\omega}$$

The first equation, together the known slow shear velocity from the quadrupole measurement and the measured dipole slowness $S_2$* in the slow shear-wave polarization direction, can be utilized to calibrate the LWD system *SYS*. The calibrated system is then used to determine $\delta V$. The desired anisotropy magnitude can thus be determined from the LWD dipole and quadrupole measurements.

The methodology described above for determination of azimuthal anisotropy is schematically illustrated in **Fig. 8**. 4C array data are acquired and rotated into a fixed coordinate system **801**. The angle necessary rotation angle for this purpose may be obtained by measurements with a magnetometer on the rotating logging tool. The principal direction $\theta$ is determined relative to the fixed coordinate system using prior art methods such as discussed above with reference to **eq. (11)** and the data are rotated 805 to the principal coordinate system using **eq. (12)**.

Quadrupole data are also acquired with the logging tool **803.** In many instances, only one quadrupole wave is detectable and this is indicative of the slow shear wave velocity obtained **807.** From the dipole data in the principal direction and the quadrupole data, the fast and slow shear velocity are obtained 809. This can be done as described above using the approximations given by **eqns. (16)- (17).** Alternatively, the calibration can be done without making the small anisotropy approximation, and the fast and slow shear velocities obtained directly from **eqns. (14)- (15).** The method used for obtaining the velocities from the array slowness measurement is substantially the same as described above with respect to **Fig. 7**.

In one embodiment of the invention, the transmitter receiver configuration used for the quadrupole logging can also be used for obtaining the 4C (cross-dipole data). This has been described in the *Tang* '263 application and ensures that the quadrupole and 4C data are acquired at substantially the same depth. In one embodiment of the invention, the 4C data are acquired along with the toolface information at specified time intervals, and following rotation into a fixed coordinate system, the individual components are stacked to improve the signal to noise ratio. This can be done over a specified amount of penetration of the earth formation by the drilling assembly and the logging tool. In an alternate embodiment of the invention, the toolface angle information is processed by a downhole processor that then uses the angle measurement to acquire the 4C data at a a fixed angle. In this alternate embodiment, the stacking is done prior to the rotation to a fixed coordinate system.

In an alternate embodiment of the invention, the fast and slow formation shear velocities are obtained from the quadrupole data only. The basis for this is shown in **Fig. 10** which is an illustration of quadrupole array data at large amplifications. Shown in **Fig. 10** are modeling results of quadrupole-wave propagation with an LWD acoustic tool and an azimuthally anisotropic formation. (Formation fast and slow shear velocities are 1185 and 938 m/s, respectively, and the drilling mud has a density of 1.56 g/cc and acoustic velocity of 1350 m/s.) This figure shows the presence of fast and slow quadrupole waves. The propagation of the two waves is respectively along the moveout of the fast and slow shear waves, as indicated by two time lines **1011** and **1013** in the figure. The slow quadrupole shows some dispersion effect, for the wave arrival is progressively delayed relative to the slow shear arrival time. The amplitude of slow quadrupole wave is much larger than that of the fast quadrupole wave. The importance of this theoretical result is that it demonstrates the azimuthal shear-wave anisotropy can be determined by simultaneously measuring the fast and slow quadrupole waves and determining their respective velocity.

Following the theoretical prediction, a field LWD quadrupole data set is processed and analyzed to determine the azimuthal shear anisotropy. This is shown in **Fig. 11.** These data are acquired in a horizontal well drilled through a chalk formation. The low gamma-ray values **1051** shown in track 1 indicate that this is a carbonate-type (chalk) formation. Sedimentary rocks generally exhibit a transversely isotropic (TI) type of anisotropy between directions perpendicular and parallel to bedding. The TI anisotropy, seen from a horizontal borehole, becomes the azimuthal anisotropy, for the axis of the TI symmetry is now perpendicular to the borehole. Track 2 of **Fig. 11** shows the LWD-measured quadrupole wave data (displayed using a VDL plot, only receiver 1 data from a six-receiver array is displayed). The data indeed show two arrivals, a fast wave **1055** with small amplitude and a slow wave **1053** with large amplitude. Track 4 shows the fast **1059** and slow **1057** slowness curves determined from the two (fast and slow) quadrupole waves, with their difference shaded, indicating anisotropy. The curve **1057** was obtained using the method described above with reference to **Fig. 7,** i.e., from the quadrupole data only and using a dispersion correction for the slow arrival **1053**. The curve **1055** (and **1011** in **Fig. 10)** shows little or no dispersion and gives a direct measurement of the fast shear wave slowness **1059.** Also shown in **Fig. 11** is a compressional-wave slowness curve **1061,** measured from the LWD acoustic tool. The shear slowness results are discussed below.

The fast and slow shear slowness curves show good correlation with each other. The two curves also show good correlation with the compressional slowness curve. The anisotropy magnitude, as determined by the relative difference between the fast and slow shear slowness values, is shown as the shaded curve in track 3. The shear anisotropy of this chalk formation generally varies between 10%-20%, which is a reasonable estimate for the anisotropy of a chalk formation. [Reported value of anisotropy of chalk, e.g, Austin chalk, is on the order of 15%, see Sinha et al: "Borehole flexural models in anisotropic formations" in Geophysics, vol.59, N°.7 (July 1994), P.1037 - 1052]. The field anisotropy determination example, coupled with the theoretical modeling, demonstrates the validity of the quadrupole-wave anisotropy-estimation method.

A drawback of the quadrupole approach is that it can only determine the anisotropy magnitude. Another potential drawback is that, as seen in **Figs. 10** and **11**, the fast quadrupole usually has much smaller amplitude than that of the slow quadrupole wave. Furthermore, the quadrupole-only approach is applicable for large anisotropy situations where the splitting of fast and slow quadrupole waves can be easily determined. In the general situation of small to medium anisotropy, the approach using quadrupole and dipole combination is recommended. However, even for the situation where the azimuthal anisotropy is moderate, the values derived from the quadrupole-only analysis serve as a consistency check on results obtained using a combination of quadrupole and 4C data.

Next, we discuss the following seven subjects: (1) the collar effect, (2) the operating frequency effect, (3) the tool eccentricity effect, (4) the borehole size effect, (5) the mud effect, (6) the tool azimuth effect, and (7) the measurement of an anisotropic formation. These discussions are based on numerical simulations using a model.

Unless otherwise stated, we choose the borehole size to be 216 mm (8.5 in). The mud weight is 1,32 mg/l (11 lb/gal). By assuming the mud rigidity to be the same as that of water, we have the mud slowness to be 745 ms/m (227 μs/ft). The drill collar has an inner diameter of 54 mm (2 1/8 in) and an outer diameter of 178 mm (7 in). The compressional and shear slownesses and density of the collar are 171 μs/m (52 μs/ft) 318ms/m (97 ms/ft), and 7.85 g/cm$^3$, respectively. See Table 1. The central source frequency is 1.5 kHz.

Table 1. Model parameters for quadrupole waveform calculations

| | |
|---|---|
| Collar ID | 54 mm (2 1/8 in) |
| collar OD | 178 mm (7 in) |
| Collar density | 7.85 g/cm$^3$ |
| Frequency | 1.5 kHz |
| Borehole | 216 mm (8.5 in) |
| Mud weight | 1,32 kg/l (11 lb/gal) |
| Mud slowness | 745 μs/m (227 μs/ft) |
| Form compressional | 400 μs/m (122 μs/ft) |
| form. shear | 1001 μs/m (305 μs/ft) |
| Form. density | 2.1 g/cm$^3$ |

The presence of a drill collar alters the coupling condition of the tool with the formation. Because of the reduced fluid annulus between the collar and formation, the quadrupole wave will become more dispersive. This is clearly seen in **Fig. 12.** The initial, low-frequency arrivals **1201, 1203** define the formation shear velocity regardless of the collar being

present or not. However, with the collar, the waveforms are more dispersive.

Dispersion analysis in **Fig. 13** confirms that the drill collar increases the dispersion of the quadrupole wave. Compare the dispersion with **1301** and without 1303 the drill collar. The collar also lowers the cut-off frequency of the quadrupole wave. This implies that a source frequency of 1.5 kHz now excites the relatively higher frequency portion of the dispersion curve. This result shows that the effect of a drill collar must be taken into account in interpreting the LWD data. It also implies that a lower operating frequency must be used for LWD than for an openhole under the same formation condition.

Because the quadrupole waveforms are dispersive, derivation of the formation shear velocity will depend on the operating frequency. Like the wireline dipole shear measurement, the shear velocity derived from quadrupole waveforms approaches the true formation shear velocity in the low frequency limit and decreases as frequency increases. For minimal dispersion effect, the lowest possible frequency should be used. If frequency falls in the range of strong dispersion (around 3.5 kHz in **Fig. 13** in the presence of the collar), an Airy phase may develop which will severely obscure the earlier, lower-frequency arrivals. To illustrate, **Fig. 14** shows the waveforms at 1.5 kHz and 3 kHz. Obviously, the energy in the 3-kHz wave package is much delayed as compared to 1.5 kHz. The initial arrival times for the two different frequencies **1401, 1403** appear to be the same but the initial arrivals for 3 kHz have significantly lower signal-to-noise ratios. This confirms that a low frequency must be used.

In deviated and horizontal wells, tool eccentricity is unavoidable. A decentralized quadrupole tool produces monopole and dipole contaminations that interfere with the quadrupole signals. The effect depends on the amount of eccentricity. We consider three representative cases with the tool being (a) centralized, (b) in contact with the formation, and (3) half way between. For a 178 mm (7-in) tool in a 216 mm (8.5-in) borehole, the maximum tool eccentricity is about 19 mm (¾-in). To prevent the tool from being rigidly connected to the formation even for case (b), a fluid gap of one cell size wide (6 mm) is left between the tool surface and the formation.

**Fig. 15** shows the waveforms for the three different cases.. In the maximum eccentricity case (**Fig. 15b**), the semblance-derived slowness is about 30% larger than for the centralized case. However, for a moderately decentralized tool (**Fig. 15c**), the slowness is very close to that of a centralized tool. This observation is important because in practice the tool is often equipped with stabilizers from its ends that limit the eccentricity effect.

A decentralized quadrupole source generates mono-pole, dipole, and quadrupole excitations. The dipole excitation generates flexural tool wave. Around a source frequency of 1.5 kHz, the flexural tool wave can propagate at velocities up to 2000 m/s (Tang et al., SEG Int'l Exposition and 72nd Annual Meeting, Salt Lake City, Utah, USA, October 6-11, 2002), much faster than the formation shear velocity. This wave is visible, especially from **Fig. 15b.**

A more important consequence of a decentralized quadrupole tool is the generation of monopole excitation that produces a Stoneley wave propagating along the borehole. The Stoneley wave may have strong energy and interfere with the quadrupole signals. Figs **15b** and **15c** show the presence of the Stoneley wave. Notice the frequency change in the first trace 3.35 m (11 ft) spacing) at about 4.7 ms in **Fig. 15b** and the third trace 3.81 m ((12.5 ft) spacing) at about 5 ms in **Fig. 15c.** Superimposed on the plots are the predicted Stoneley wave arrivals **1507**, **1509** in the low-frequency limit. The Stoneley wave velocity in the presence of a drill collar is given, for the low-frequency limit, by (Tang et al., "Shear-Velocity Measurement in the Logging-While-Drilling Environment : Modeling and Field Evaluations" Petrophysics, vol. 44, No.2 (March-April 2003), P.79-90)

$$V = \frac{V_{mud}\sqrt{1-(a/R)^2}}{\sqrt{1-(a/R)^2+(\rho_{mud}V_{mud}^2)/(\rho_s V_s^2)}} \qquad (18)$$

10

where $V_{mud}$ is the mud velocity, $\rho_{mud}$ the mud density, $V_s$ the formation shear velocity, $\rho_{mud}$ the formation density, *a* the tool radius, *R* the borehole radius.

The typical hole size for running a 178 mm (7-in) tool is 216 mm (8.5 in). However, larger holes are possible in practice depending on the drill bit size. The major concern about the hole size is its effect on the tool coupling with the formation and the dispersion characteristics of the quadrupole wave. To illustrate the capability of a 178 mm (7-in) tool for larger holes, Fig. 16 shows the waveforms for three different hole sizes from 216 mm (8.5 in) to 311 mm (12.25 in). Apparently, as the hole size increases, the frequency content of the waveforms is slightly decreased. However, the derived shear velocities have little variation. This indicates that the hole size is not critical to quadrupole shear measurement.

Mud weight can significantly affect the quadrupole waveform signatures. Depending on the formation shear velocity, a slow formation (shear velocity less than P-wave velocity of mud) can become fast (shear velocity greater than

P-wave velocity of mud) if the mud weight is exceedingly high. The dispersion characteristics will thus change even for the same formation. This is particularly important in cases where different mud weights are used to drill different sections of a well to optimize the well stability and for other considerations. **Fig.17** shows the waveforms for mud weights of 1,05 mg/l (8.8 lb/gal) and 1,92 mg/l (16 lb/gal), respectively. The corresponding mud slownesses are 745 μs/m (227 μs/ft) and 899 μs/m (274 μs//ft), respectively. The formation shear slowness is 768 μs/m (234 μs/ft), falling in between those of the lighter and heavier muds. The frequency is again 1.5 kHz. Note that for the heavier mud, the wave is more dispersive and lasts longer than for the lighter mud. This is consistent with the observation that a fast formation is more dispersive than a slow one (Kurkjian and Chang, "Acoustic multipole sources in fluid-filled boreholes" Geophysics, Vol. 51, No.1 (January 1986), P. 148-163; *Chen,* 1989).

A TI formation has two distinct shear velocities: faster and slower velocities. It is known that in a vertical well, the quadrupole wave is primarily responsive to the slower shear velocity and has little sensitivity to the faster velocity. However, it is not clear what the tool measures in a deviated well. This issue is important because many reservoirs are acoustically anisotropic. To investigate, we assumed that formations have 30% anisotropy. Such high anisotropy is not unrealistic (Wang et al., "Using Multicomponent Induction Resistivity and Cross-Dipole Acoustic Logs to Jointly Characterize Drilling - Induced Fractures", Society of Professional Well Log Analysts, 43rd Annual Logging Symposium, Oiso, Japan, June 2-6, 2002). We consider three representative cases: (a) fast, (b) intermediate, and (c) slow formations. The slownesses of each formation are given in Table 2. The fast formation has its both shear velocities faster than the mud velocity; the slow formation has its both shear velocities slower than the mud velocity. The intermediate formation has one shear velocity faster and the other slower than the mud velocity. These three cases are expected to cover all practical formation types.

Table 2

| Shear slownesses and densities of three TI media. The mud slowness is 745 μs/m (227 μs/ft) | | | |
|---|---|---|---|
| Type of formation | Faster shear, μs/m (μs/ft) | Slower shear, μs/m (μs/ft) | Density (g/cm$^3$) |
| Fast | 525 (160) | 666 (203) | 2.5 |
| Intermediate | 682 (208) | 860 (262) | 2.3 |
| Slow | 1001 (305) | 1263 (385) | 2.1 |

We focus on the slow formation to study the tool measurement at various borehole deviation angles. We produced waveforms for deviation angles from 0° degree (vertical) to 90 degrees (horizontal) with a 15°increment. Only those for 0°, 30°, 60°, and 90° are shown in **Fig.18.** To simplify, we assume that the tool is centralized. This condition may rarely be achieved, especially in a deviated well, but the result can still give insights into the tool measurement. **Fig.18** shows that in a vertical well, the wave measures only the slower shear velocity 1803 and not the fast velocity **1801**. This is consistent with the theoretical expectation. At 30° dip, the initial arrivals, though barely perceptible in the figure, fall in between the faster and slower shear arrivals, indicating that the wave picks up a mixture of the faster and slower shear velocities. At 60° to 90° deviations, the wave splits into faster and slower arrivals corresponding to the faster and slower shear velocities, respectively. This is similar to the behavior of a wireline dipole tool in a TI medium (*Wang* et al., 2002).

The quadrupole wave splitting is also observed for fast and intermediate TI formations. **Fig.19** shows the quadrupole waveforms for a horizontal well. All the above results indicate that the quadrupole wave splits into two arrivals in a TI formation at high deviation angles, regardless of the type of formation.

In a TI formation, the quadrupole measurement depends on the tool toolface direction in the borehole. Here, the toolface direction is defined as the angle at which the two positive (expanding) monopoles make to the *x*-axis. In the above, we have assumed the toolface angle is 0° degree (referred to as the normal quadrupole). This is shown in the left portion of **Fig. 20c.** The other important case is when the tool is rotated 45° about its axis. This shown in the right portion of **Fig. 20c.** For crossed dipoles, this rotation angle is 90°. **Fig. 20a** compares the waveforms for a 45° - quadrupole tool in the same slow TI formation as in **Fig 18.** At low deviation angles (e.g., 30°), the waveforms are insensitive to the toolface angle. Compare **1951** to **1953.** At high deviation angles (e.g., 60°), the waveforms strongly depend on the toolface angle, especially for the later arrival. Compare **1961** to **1963.** The dependence on toolface angle of the waveforms at high deviation angles makes it possible to define the TI symmetry axis that is of practical importance.

Specifically, in one embodiment of the invention, the toolface angle is monitored, and acquisition of the quadrupole data is triggered when the toolface angle is close to a fixed value, such as 45°. It should be noted that acquisition may also be made at any integer multiple of 90° relative to the fixed value. The quadrupole data acquired in this fashion will provide a detectable difference between the fast and slow shear velocities of the formation, thus making possible the determination of azimuthal anisotropy magnitude and direction.

In an alternate embodiment of the invention, data are acquired without regard to the toolface angle. Following the acquisition, they are rotated to a fixed angle such as 45° using conventional rotation methods. The rotated data are then used for determination of azimuthal anisotropy magnitude and direction.

The above description has been made with respect to a LWD application of the invention. The present invention may also be used in Logging-while-Tripping. As would be known to those versed in the art, it is common for drillbits to wear out and the process of removing a drillstring for the purpose of changing a drill bit is called "tripping." Making measurements while tripping has the additional advantage that no drilling is being carried out, so that the signals received by the receivers of the present logging tool are not contaminated by drillbit generated noise.

## Claims

1. A method of determining a characteristic of subsurface earth formation (95) penetrated by a borehole (26), including the following steps:

- conveying an acoustic logging tool in the borehole (26),
- using a source (105) on said acoustic logging tool for generating a quadrupole wave in said earth formation (95),
- using an array of receivers for receiving said propagating quadrupole wave and producing signals indicative of said propagating quadrupole wave,
- **characterized in that** the method comprises the steps of :
- determining a quadrupole wave spectrum $A(\omega)$ for a suitable trace in the array,
- determining a first slowness $S^*$ of said quadrupole wave from signals received by a plurality of receivers on said acoustic logging tool,
- selecting a trial formation shear wave velocity $V_s$ for determining a slowness dispersion curve $S(\omega,S^*)$,
- computing a weighted spectral average slowness $\overline{S}$ according to the equation

$$\overline{S} = \frac{\int_{-\infty}^{\infty} S(\omega, S^*)\omega^2 |A(\omega)|^2 d\omega}{\int_{-\infty}^{\infty} \omega^2 |A(\omega)|^2 d\omega}$$

- comparing the first slowness $S^*$ to the weighted spectral average slowness $\overline{S}$, and
- adjusting the trial formation shear wave velocity $V_s$ until the measured first slowness $S^*$ satisfied the above equation.

2. The method of claim 1 further comprising obtaining additional parameters including:

(i) a diameter of said borehole (26) using a caliper,
(ii) a density and acoustic velocity of a fluid in said borehole (26), and
wherein determining said formation shear velocity is further based upon said additional parameters.

3. The method of claim 1 wherein said weighted average spectral slowness $\overline{S}$ is given by the equivalent equation of the form

$$\overline{S} = \frac{\int_{-\infty}^{\infty} S(\omega, V_S)\omega^2 A^2(\omega) d\omega}{\int^{\infty} \omega^2 A^2(\omega) d\omega}$$

wherein $S(\omega,V_S)$ is the equivalent, dispersion relation of said quadrupole wave data as a function of angular frequency $\omega$ and said shear velocity $V_S$.

4. The method of claim 3, wherein determining said formation shear velocity $V_s$ further comprises adjusting a value of

$V_f$ until the equation in claim 3 is satisfied.

**5.** The method of claim 1, wherein said formation (95) is azimuthally anisotropic and said formation shear velocity is a slow shear velocity, the method further comprising:

(i) obtaining array cross-dipole data, and
(ii) determining a fast shear slowness of said formation (95) from said slow shear velocity and said cross-dipole data.

**6.** The method of claim 5, wherein determining said fast shear velocity further comprises using an orientation sensor on said logging tool.

**7.** The method of claim 5, wherein determining said fast shear velocity further comprises rotating said cross-dipole data to a fixed coordinate system.

**8.** The method of claim 7, wherein said fixed coordinate system is selected from the group consisting of

(I) an earth based coordinate system, and
(II) a formation based coordinate system.

**9.** The method of claim 7 further comprising determining a principal direction of anisotropy and rotating said cross-dipole data in said fixed coordinate system to a principal coordinate system.

**10.** The method of claim 5 further comprising using a weighted average spectral slowness for relating said fast shear wave slowness to a dispersion relation.

**11.** The method of claim 1, wherein said formation (95) is azimuthally anisotropic, said first measured slowness is a slow quadrupole slowness, and said determined shear velocity is a slow shear velocity, the method further comprising:

(i) determining a second quadrupole wave slowness, and
(ii) determining a fast shear velocity.

**12.** The method of claim 1 further comprising operating said acoustic tool at a frequency of less than 3.0 kHz.

**13.** The method of claim 1 further comprising operating said tool near a central position of said borehole (26).

**14.** The method of claim 1 further comprising using a fluid in the borehole (26) with a compressional velocity less than a shear velocity of said formation (95).

**15.** The method of claim 1 further comprising:

(i) using an orientation device for determining a toolface angle of said acoustic tool during continued rotation of said acoustic tool, and
(ii) using said determined toolface angle for activating said source (105) on said acoustic logging tool when said toolface angle is substantially equal to a predetermined value.

**16.** The method of claim 15 further comprising determining a direction of TI symmetry of said earth formation (95).

**17.** An apparatus for use in a borehole (26) in an earth formation (95) for determining a characteristic of the formation (95) according to claim 1, the apparatus comprising:

- an acoustic tool on a bottom hole assembly (BHA) (90), said acoustic tool having an acoustic source (105) for propagating a quadrupole wave into said earth formation (95),
- a plurality of receivers on said acoustic tool for receiving said propagating quadrupole wave and producing signals indicative of said propagating quadrupole wave,
- a processor (40) for determining from said signals and an effective modulus of said acoustic tool a formation shear wave velocity $V_s$,

**characterized in that** said processor (40), is adapted to perform the method according to claim 1 **in that**, it determines a first slowness S* of said quadrupole wave and further comprises using a weighted average spectral slowness $\overline{S}$ for relating said measured slowness S* to a dispersion relation of said array quadrupole data.

**18.** The apparatus of claim 17 further comprising:

(i) a caliper on said BHA for obtaining a diameter of said borehole (26), and
(ii) a device for measuring a density and acoustic velocity of a fluid in said borehole (26).

**19.** The apparatus of claim 17, wherein said weighted average spectral slowness $\overline{S}$ is given by the equivalent equation

$$\overline{S} = \frac{\int_{-\infty}^{\infty} S(\omega, V_S)\omega^2 A^2(\omega)d\omega}{\int_{-\infty}^{\infty} \omega^2 A^2(\omega)d\omega}$$

wherein $S(\omega, V_s)$ is the equivalent, dispersion relation of said quadrupole wave data as a function of angular frequency $\omega$ and said shear velocity $V_s$.

**20.** The apparatus of claim 19, wherein said processor (40) determines said formation slowness by adjusting a value of $V_f$ until the equation in claim 19 is satisfied.

**21.** The apparatus of claim 17, wherein said formation (95) is azimuthally anisotropic and said formation shear velocity $V_s$ is a slow shear velocity, the apparatus further comprising a source (105) for producing dipole shear waves in said formation (95) with a first polarization and a second polarization different from said first polarization, and, wherein said processor (40) determines a fast shear slowness of said formation (95) from said slow shear velocity and signals received by acoustic receivers indicative of said dipole shear waves.

**22.** The apparatus of claim 21 further comprising an orientation sensor on BHA (90) for determining a toolface orientation of said logging tool during continued rotation of said BHA (90).

**23.** The apparatus of claim 21, wherein said processor (40) determines said fast shear velocity by rotating said shear waves with said first and second polarizations to a fixed coordinate system.

**24.** The apparatus of claim 23, wherein said fixed coordinate system is selected from the group consisting of

(I) an earth based coordinate system, and
(II) a formation based coordinate system.

**25.** The apparatus of claim 23, wherein said processor (40) further determines a principal direction of anisotropy and rotates said shear waves in said fixed coordinate system to a principal coordinate system.

**26.** The apparatus of claim 17 further comprising a conveyance device for conveying said BHA (90) into said borehole (26), said conveyance device selected from the group consisting of

(i) a drilling tubular, and
(ii) coiled tubing.

**27.** The apparatus of claim 17, wherein said acoustic tool is operated at a frequency of less than 3.0 kHz.

**28.** The apparatus of claim 18, wherein said tool is operated near a central position of said BHA (90) in said borehole (26).

**29.** The apparatus of claim 17 further comprising an orientation device for determining a toolface angle of said acoustic tool during continued rotation of said acoustic tool, and, wherein said processor (40) uses said determined toolface angle for activating said source (105) when said toolface angle is substantially equal to a predetermined value.

30. The apparatus of claim 29, wherein said processor (40) further determines a direction of TI symmetry of said earth formation (95).

## Patentansprüche

1. Verfahren zur Bestimmung eines Charakteristikums einer unterirdischen Erdformation (95), die von einem Bohrloch (26) durchdrungen ist, das die folgenden Schritte aufweist:

   - Befördern eines akustischen Bohrlochmessgeräts in das Bohrloch (26),
   - Verwenden einer Quelle (105) an dem akustischen Bohrlochmessgerät zum Erzeugen einer Quadrupolwelle in der Erdformation (95),
   - Verwenden einer Anordnung von Empfängern zum Empfangen der sich ausbreitenden Quadrupolwelle und Erzeugen von Signalen, welche für die sich ausbreitende Quadrupolwelle indikativ sind,

   **dadurch gekennzeichnet, dass** das Verfahren die Schritte umfasst:

   - Bestimmen eines Quadrupolwellenspektrums A(ω) für eine geeignete Spur in der Anordnung,
   - Bestimmen einer ersten Langsamkeit S* der Quadrupolwelle aus Signalen, die von einer Vielzahl von Empfängern an dem akustischen Bohrlochmessgerät empfangen wurden,
   - Auswählen einer Testformations-Scherwellengeschwindigkeit $V_s$ zum Bestimmen einer Langsamkeitsdispersionskurve S(ω,S*),
   - Berechnen einer gewichteten Durchschnittsspektrallangsamkeit $\overline{S}$ gemäß der Gleichung

$$\overline{S} = \frac{\int_{-\infty}^{\infty} S(\omega, S^*)\omega^2 |A(\omega)|^2 d\omega}{\int_{-\infty}^{\infty} \omega^2 |A(\omega)|^2 d\omega}$$

   - Vergleichen der ersten Langsamkeit S* mit der gewichteten Durchschnittsspektralgeschwindigkeit $\overline{S}$ und
   - Einstellen der Testformations-Scherwellengeschwindigkeit $V_s$, bis die gemessene erste Langsamkeit S* die obige Gleichung erfüllt.

2. Verfahren nach Anspruch 1, das weiterhin das Erhalten von zusätzlichen Parametern umfasst, einschließlich:

   (i) eines Durchmessers des Bohrlochs (26) unter Verwendung eines Tasters,
   (ii) einer Dichte und akustischen Geschwindigkeit eines Fluids in dem Bohrloch (26) und
   wobei die Bestimmung der Formationsschergeschwindigkeit weiterhin auf den zusätzlichen Parametern basiert.

3. Verfahren nach Anspruch 1, wobei die gewichtete Durchschnittsspektrallangsamkeit $\overline{S}$ durch die Äquivalenzgleichung der Form

$$\overline{S} = \frac{\int_{-\infty}^{\infty} S(\omega, V_s)\omega^2 A^2(\omega) d\omega}{\int_{-\infty}^{\infty} \omega^2 A^2(\omega) d\omega}$$

   gegeben ist, wobei $S(\omega,V_s)$ die Äquivalenzdispersionsrelation der Quadrupolwellendaten als Funktion einer Winkelfrequenz ω und der Schergeschwindigkeit $V_s$ ist.

4. Verfahren nach Anspruch 3, wobei das Bestimmen der Formationsschergeschwindigkeit $V_s$ weiterhin das Einstellen

eines Wertes von $V_f$ umfasst, bis die Gleichung in Anspruch 3 erfüllt ist.

5. Verfahren nach Anspruch 1, wobei die Formation (95) azimutal anisotrop ist und die Formationsschergeschwindigkeit eine langsame Schergeschwindigkeit ist, wobei das Verfahren weiterhin umfasst:

   (i) Erhalten von Anordnungskreuzdipoldaten und
   (ii) Bestimmen einer schnellen Scherlangsamkeit der Formation (95) aus der langsamen Schergeschwindigkeit und den Kreuzdipoldaten.

6. Verfahren nach Anspruch 5, wobei das Bestimmen der schnellen Schergeschwindigkeit weiterhin das Verwenden eines Orientierungssensors an dem Bohrlochmessgerät umfasst.

7. Verfahren nach Anspruch 5, wobei das Bestimmen der schnellen Schergeschwindigkeit weiterhin das Drehen der Kreuzdipoldaten zu einem festen Koordinatensystem umfasst.

8. Verfahren nach Anspruch 7, wobei das feste Koordinatensystem aus der Gruppe ausgewählt ist, die besteht aus

   (I) einem erdbasierten Koordinatensystem und
   (II) einem formationsbasierten Koordinatensystem.

9. Verfahren nach Anspruch 7, das weiterhin das Bestimmen einer Hauptrichtung der Anisotropie und das Drehen der Kreuzdipoldaten in dem festen Koordinatensystem zu einem Hauptkoordinatensystem umfasst.

10. Verfahren nach Anspruch 5, das weiterhin die Verwendung einer gewichteten Durchschnittsspektrallangsamkeit umfasst, um die schnelle Scherwellenlangsamkeit mit einer Dispersionsrelation in Beziehung zu setzen.

11. Verfahren nach Anspruch 1, wobei die Formation (95) azimutal anisotrop ist, die erste gemessene Langsamkeit eine langsame Quadrupollangsamkeit ist und die bestimmte Schergeschwindigkeit eine langsame Schergeschwindigkeit ist, wobei das Verfahren weiterhin umfasst:

   (i) Bestimmen einer zweiten Quadrupolwellenlangsamkeit und
   (ii) Bestimmen einer schnellen Schergeschwindigkeit.

12. Verfahren nach Anspruch 1, das weiterhin den Betrieb des akustischen Geräts bei einer Frequenz von weniger als 3,0 kHz umfasst.

13. Verfahren nach Anspruch 1, das weiterhin den Betrieb des Geräts nahe einer zentralen Position des Bohrlochs (26) umfasst.

14. Verfahren nach Anspruch 1, das weiterhin das Verwenden eines Fluids in dem Bohrloch (26) mit einer Kompressionsgeschwindigkeit von weniger als einer Schergeschwindigkeit der Formation (95) umfasst.

15. Verfahren nach Anspruch 1, das weiterhin umfasst:

   (i) Verwenden einer Orientierungsvorrichtung zum Bestimmen eines Gerätstirnseitenwinkels des akustischen Geräts während einer fortgesetzten Drehung des akustischen Geräts und
   (ii) Verwenden des bestimmten Gerätstirnseitenwinkels zum Aktivieren der Quelle (105) an dem akustischen Bohrlochmessgerät, wenn der Gerätstirnseitenwinkel im Wesentlichen gleich einem vorher festgelegten Wert ist.

16. Verfahren nach Anspruch 15, das weiterhin das Bestimmen einer Richtung der TI-Symmetrie der Erdformation (95) umfasst.

17. Vorrichtung zur Verwendung in einem Bohrloch (26) in einer Erdformation (95) zum Bestimmen eines Charakteristikums der Formation (95) gemäß Anspruch 1, wobei die Vorrichtung umfasst:

   - ein akustisches Gerät an einem Sohlenaggregat (BHA) (90), wobei das akustische Gerät eine akustische Quelle (105) zum Ausbreiten einer Quadrupolwelle in die Erdformation (95) aufweist,
   - eine Vielzahl von Empfängern an dem akustischen Gerät zum Empfangen der sich ausbreitenden Quadrupolwelle und Erzeugen von Signalen, welche für die sich ausbreitende Quadrupolwelle indikativ sind,
- einen Prozessor (40) zum Bestimmen einer Formationsscherwellengeschwindigkeit $V_s$ aus den Signalen und einem effektiven Modul des akustischen Geräts,

**dadurch gekennzeichnet, dass** der Prozessor (40) für die Durchführung des Verfahrens nach Anspruch 1 insofern angepasst ist, als er eine erste Langsamkeit S* der Quadrupolwelle bestimmt und weiterhin das Verwenden einer gewichteten Durchschnittsspektrallangsamkeit $\overline{S}$ umfasst, um die gemessene Langsamkeit S* zu einer Dispersionsrelation der Anordnungsquadrupoldaten in Beziehung zu setzen.

**18.** Vorrichtung nach Anspruch 17, die weiterhin umfasst:

(i) einen Taster an dem BHA zum Erhalten eines Durchmessers des Bohrlochs (26) und
(ii) eine Vorrichtung zur Messung einer Dichte und akustischen Geschwindigkeit eines Fluids in dem Bohrloch (26).

**19.** Vorrichtung nach Anspruch 17, wobei die gewichtete Durchschnittsspektrallangsamkeit $\overline{S}$ durch die Äquivalenzgleichung

$$\overline{S} = \frac{\int_{-\infty}^{\infty} S(\omega, V_s)\omega^2 A^2(\omega)d\omega}{\int_{-\infty}^{\infty} \omega^2 A^2(\omega)d\omega}$$

gegeben ist, wobei $S(\omega,V_s)$ die Äquivalenzdispersionsrelation der Quadrupolwellendaten als Funktion der Winkelfrequenz $\omega$ und der Schergeschwindigkeit $V_s$ ist.

**20.** Vorrichtung nach Anspruch 19, wobei der Prozessor (40) die Formationslangsamkeit durch Einstellen eines Werts von $V_f$ bestimmt, bis die Gleichung in Anspruch 19 erfüllt ist.

**21.** Vorrichtung nach Anspruch 17, wobei die Formation (95) azimutal anisotrop ist und die Formationsschergeschwindigkeit $V_s$ eine langsame Schergeschwindigkeit ist, wobei die Vorrichtung weiterhin eine Quelle (105) zum Erzeugen von Dipolscherwellen in der Formation (95) mit einer ersten Polarisation und einer von der ersten Polarisation unterschiedlichen zweiten Polarisation umfasst, und wobei der Prozessor (40) eine schnelle Scherlangsamkeit der Formation (95) aus der langsamen Schergeschwindigkeit und den von akustischen Empfängern empfangenen Signalen bestimmt, welche für die Dipolscherwellen indikativ sind.

**22.** Vorrichtung nach Anspruch 21, die weiterhin einen Orientierungssensor an einem BHA (90) zum Bestimmen einer Gerätstirnseitenausrichtung des Bohrlochmessgeräts während einer fortgesetzten Drehung des BHAs (90) umfasst.

**23.** Vorrichtung nach Anspruch 21, wobei der Prozessor (40) die schnelle Schergeschwindigkeit durch Drehen der Scherwellen mit den ersten und zweiten Polarisationen zu einem festen Koordinatensystem bestimmt.

**24.** Vorrichtung nach Anspruch 23, wobei das feste Koordinatensystem aus der Gruppe ausgewählt ist, die besteht aus

(I) einem erdbasierten Koordinatensystem und
(II) einem formationsbasierten Koordinatensystem.

**25.** Vorrichtung nach Anspruch 23, wobei der Prozessor (40) weiterhin eine Hauptrichtung der Anisotropie bestimmt und die Scherwellen in dem festen Koordinatensystem zu einem Hauptkoordinatensystem dreht.

**26.** Vorrichtung nach Anspruch 17, die weiterhin eine Beförderungsvorrichtung zum Befördern des BHAs (90) in das Bohrloch (26) umfasst, wobei die Beförderungsvorrichtung aus der Gruppe ausgewählt ist, die besteht aus

(i) einem Bohrgestänge und

(ii) einer Rohrschlange.

**27.** Vorrichtung nach Anspruch 17, wobei das akustische Gerät bei einer Frequenz von weniger als 3,0 kHz betrieben wird.

**28.** Vorrichtung nach Anspruch 18, wobei das Gerät nahe einer zentralen Position des BHAs (90) in dem Bohrloch (26) betrieben wird.

**29.** Vorrichtung nach Anspruch 17, die weiterhin eine Orientierungsvorrichtung zum Bestimmen eines Gerätstirnseitenwinkels des akustischen Geräts während einer fortgesetzten Drehung des akustischen Geräts umfasst, und wobei der Prozessor (40) den bestimmten Gerätstirnseitenwinkel zum Aktivieren der Quelle (105) verwendet, wenn der Gerätstirnseitenwinkel im Wesentlichen gleich einem vorher festgelegten Wert ist.

**30.** Vorrichtung nach Anspruch 29, wobei der Prozessor (40) weiterhin eine Richtung der TI-Symmetrie der Erdformation (95) bestimmt.

## Revendications

**1.** Procédé pour déterminer une caractéristique d'une formation terrestre souterraine (95) pénétrée par un trou de forage (26), incluant les étapes suivantes :

- transporter un outil de diagraphie acoustique dans le trou de forage (26),
- utiliser une source (105) sur ledit outil de diagraphie acoustique pour générer une onde quadripolaire dans ladite formation terrestre (95),
- utiliser un réseau de récepteurs pour recevoir ladite onde quadripolaire se propageant et produire des signaux indicatifs de ladite onde quadripolaire se propageant,

**caractérisé en ce que** le procédé comprend les étapes de :

- détermination d'un spectre d'ondes quadripolaires $A(\omega)$ pour un tracé approprié dans le réseau,
- détermination d'une première lenteur $S^*$ de ladite onde quadripolaire à partir de signaux reçus par une pluralité de récepteurs sur ledit outil de diagraphie acoustique,
- sélection d'une vitesse d'essai d'onde de cisaillement de formation $V_s$ pour déterminer une courbe de dispersion $S(\omega,S^*)$,
- calcul d'une lenteur moyenne spectrale pondérée $\overline{S}$ selon l'équation

$$\overline{S}=\frac{\int_{-\infty}^{\infty} S(\omega,S^*)\omega^2\left|A(\omega)\right|^2 d\omega}{\int_{-\infty}^{\infty} \omega^2\left|A(\omega)\right|^2 d\omega},$$

- comparaison de la première lenteur $S^*$ avec la lenteur moyenne spectrale pondérée $\overline{S}$ et
- ajustement de la vitesse d'essai d'onde de cisaillement de formation $V_s$ jusqu'à ce que la première lenteur $S^*$ mesurée satisfasse à l'équation ci-dessus.

**2.** Procédé selon la revendication 1, comprenant, en outre, l'obtention de paramètres supplémentaires, incluant:

(i) un diamètre dudit trou de forage (26) en utilisant un diamétreur,
(ii) une densité et une vitesse acoustique d'un fluide dans ledit trou de forage (26) et
dans lequel la détermination de ladite vitesse de cisaillement de formation est basée, en outre, sur lesdits paramètres supplémentaires.

**3.** Procédé selon la revendication 1, dans lequel ladite lenteur spectrale moyenne pondérée $\overline{S}$ est donnée par l'équation

équivalente de forme

$$\bar{S} = \frac{\int_{-\infty}^{\infty} S(\omega,V_s)\omega^2 A^2(\omega)d\omega}{\int_{-\infty}^{\infty} \omega^2 A^2(\omega)d\omega},$$

dans laquelle $S(\omega,V_s)$ est la relation de dispersion équivalente desdites données d'ondes quadripolaires en fonction de la fréquence angulaire $\omega$ et de ladite vitesse de cisaillement $V_s$.

**4.** Procédé selon la revendication 3, dans lequel la détermination de ladite vitesse de cisaillement de formation $V_s$ comprend, en outre, l'ajustement d'une valeur de $V_f$ jusqu'à ce que l'équation de la revendication 3 soit satisfaite.

**5.** Procédé selon la revendication 1, dans lequel ladite formation (95) est azimutalement anisotrope et ladite vitesse de cisaillement de formation est une vitesse de cisaillement lente, le procédé comprenant, en outre :

(i) l'obtention de données de réseau de dipôles croisés et
(ii) la détermination d'une lenteur de cisaillement rapide de ladite formation (95) à partir de ladite vitesse de cisaillement lente et desdites données de dipôles croisés.

**6.** Procédé selon la revendication 5, dans lequel la détermination de ladite vitesse de cisaillement rapide comprend, en outre, l'utilisation d'un capteur d'orientation sur ledit outil de diagraphie.

**7.** Procédé selon la revendication 5, dans lequel la détermination de ladite vitesse de cisaillement rapide comprend, en outre, la rotation desdites données de dipôles croisés pour obtenir un système de coordonnées fixe.

**8.** Procédé selon la revendication 7, dans lequel ledit système de coordonnées fixe est choisi dans le groupe comprenant

(I) un système de coordonnées basé sur la terre et
(II) un système de coordonnées basé sur la formation.

**9.** Procédé selon la revendication 7, comprenant, en outre, la détermination d'une direction principale d'anisotropie et la rotation desdites données de dipôles croisés dans ledit système de coordonnées fixe pour obtenir un système de coordonnées principal.

**10.** Procédé selon la revendication 5, comprenant, en outre, l'utilisation d'une lenteur spectrale moyenne pondérée pour établir un rapport entre ladite lenteur d'onde de cisaillement rapide et une relation de dispersion.

**11.** Procédé selon la revendication 1, dans lequel ladite formation (95) est azimutalement anisotrope, ladite première lenteur mesurée est une lenteur d'onde quadripolaire lente et ladite vitesse de cisaillement déterminée est une vitesse de cisaillement lente, le procédé comprenant, en outre :

(i) la détermination d'une seconde lenteur d'onde quadripolaire et
(ii) la détermination d'une vitesse de cisaillement rapide.

**12.** Procédé selon la revendication 1, comprenant, en outre, le fonctionnement dudit outil acoustique à une fréquence inférieure à 3,0 kHz.

**13.** Procédé selon la revendication 1, comprenant, en outre, le fonctionnement dudit outil près d'une position centrale dudit trou de forage (26).

**14.** Procédé selon la revendication 1, comprenant, en outre, l'utilisation d'un fluide dans le trou de forage (26), avec une vitesse d'onde de compression inférieure à une vitesse de cisaillement de ladite formation (95).

**15.** Procédé selon la revendication 1, comprenant, en outre :

(i) l'utilisation d'un dispositif d'orientation pour déterminer un angle de face d'outil dudit outil acoustique pendant la rotation continue dudit outil acoustique et
(ii) l'utilisation dudit angle de face d'outil déterminé pour activer ladite source (105) sur ledit outil de diagraphie acoustique lorsque ledit angle de face d'outil est sensiblement égal à une valeur prédéterminée.

**16.** Procédé selon la revendication 15, comprenant, en outre, la détermination d'une direction de symétrie transversalement isotrope de ladite formation terrestre (95).

**17.** Dispositif destiné à être utilisé dans un trou de forage (26) dans une formation terrestre (95) pour déterminer, selon la revendication 1, une caractéristique de la formation (95), le dispositif comprenant :

- un outil acoustique sur un assemblage de fond de puits (BHA) (90), ledit outil acoustique ayant une source acoustique (105) pour propager une onde quadripolaire dans ladite formation terrestre (95),
- une pluralité de récepteurs sur ledit outil acoustique pour recevoir ladite onde quadripolaire se propageant et produire des signaux indicatifs de ladite onde quadripolaire se propageant,
- un processeur (40) pour déterminer une vitesse d'onde de cisaillement de formation $V_s$ à partir desdits signaux et d'un module effectif dudit outil acoustique,

**caractérisé en ce que** ledit processeur (40) est adapté pour exécuter le procédé selon la revendication 1 **en ce qu'**il détermine une première lenteur S* de ladite onde quadripolaire, et comprend, en outre, l'utilisation d'une lenteur spectrale moyenne pondérée $\overline{S}$ pour établir un rapport entre ladite lenteur mesurée S* et une relation de dispersion desdites données de réseau de quadripôles.

**18.** Dispositif selon la revendication 17, comprenant, en outre :

(i) un diamétreur sur ledit BHA pour obtenir un diamètre dudit trou de forage (26) et
(ii) un dispositif pour mesurer une densité et une vitesse acoustique d'un fluide dans ledit trou de forage (26).

**19.** Dispositif selon la revendication 17, dans lequel ladite lenteur spectrale moyenne pondérée $\overline{S}$ est donnée par l'équation équivalente

$$\overline{S} = \frac{\int_{-\infty}^{\infty} S(\omega, V_s)\,\omega^2 A^2(\omega)\,d\omega}{\int_{-\infty}^{\infty} \omega^2 A^2(\omega)\,d\omega},$$

dans laquelle $S(\omega,V_s)$ est la relation de dispersion équivalente desdites données d'ondes quadripolaires en fonction de la fréquence angulaire $\omega$ et de ladite vitesse de cisaillement $V_s$.

**20.** Dispositif selon la revendication 19, dans lequel ledit processeur (40) détermine ladite lenteur de formation en ajustant une valeur de $V_f$ jusqu'à ce que l'équation de la revendication 19 soit satisfaite.

**21.** Dispositif selon la revendication 17, dans lequel ladite formation (95) est azimutalement anisotrope et ladite vitesse de cisaillement de formation $V_s$ est une vitesse de cisaillement lente, le dispositif comprenant, en outre, une source (105) pour produire des ondes de cisaillement dipolaires dans ladite formation (95) avec une première polarisation et une seconde polarisation différente de ladite première polarisation, et dans lequel ledit processeur (40) détermine une lenteur de cisaillement rapide de ladite formation (95) à partir de ladite vitesse de cisaillement lente et de signaux reçus par les récepteurs acoustiques qui sont indicatifs desdites ondes de cisaillement dipolaires.

**22.** Dispositif selon la revendication 21, comprenant, en outre, un capteur d'orientation sur le BHA (90) pour déterminer une orientation de face d'outil dudit outil de diagraphie pendant la rotation continue dudit BHA (90).

**23.** Dispositif selon la revendication 21, dans lequel ledit processeur (40) détermine ladite vitesse de cisaillement rapide en faisant subir une rotation aux dites ondes de cisaillement présentant lesdites première et seconde polarisations pour obtenir un système de coordonnées fixe.

**24.** Dispositif selon la revendication 23, dans lequel ledit système de coordonnées fixe est choisi dans le groupe comprenant

(I) un système de coordonnées basé sur la terre et
(II) un système de coordonnées basé sur la formation.

**25.** Dispositif selon la revendication 23, dans lequel ledit processeur (40) détermine, en outre, une direction principale d'anisotropie et fait subir une rotation aux dites ondes de cisaillement dans ledit système de coordonnées fixe pour obtenir un système de coordonnées principal.

**26.** Dispositif selon la revendication 17, comprenant, en outre, un dispositif de transport pour transporter ledit BHA (90) dans ledit trou de forage (26), ledit dispositif de transport étant choisi dans le groupe comprenant

(i) un tubage de forage et
(ii) un tubage hélicoïdale.

**27.** Dispositif selon la revendication 17, dans lequel ledit outil acoustique fonctionne à une fréquence inférieure à 3,0 kHz.

**28.** Dispositif selon la revendication 18, dans lequel ledit outil fonctionne près d'une position centrale dudit BHA (90) dans ledit trou de forage (26).

**29.** Dispositif selon la revendication 17, comprenant, en outre, un dispositif d'orientation pour déterminer un angle de face d'outil dudit outil acoustique pendant la rotation continue dudit outil acoustique et dans lequel ledit processeur (40) utilise ledit angle de face d'outil déterminé pour activer ladite source (105) lorsque ledit angle de face d'outil est sensiblement égal à une valeur prédéterminée.

**30.** Dispositif selon la revendication 29, dans lequel ledit processeur (40) détermine, en outre, une direction de symétrie transversalement isotrope de ladite formation terrestre (95).

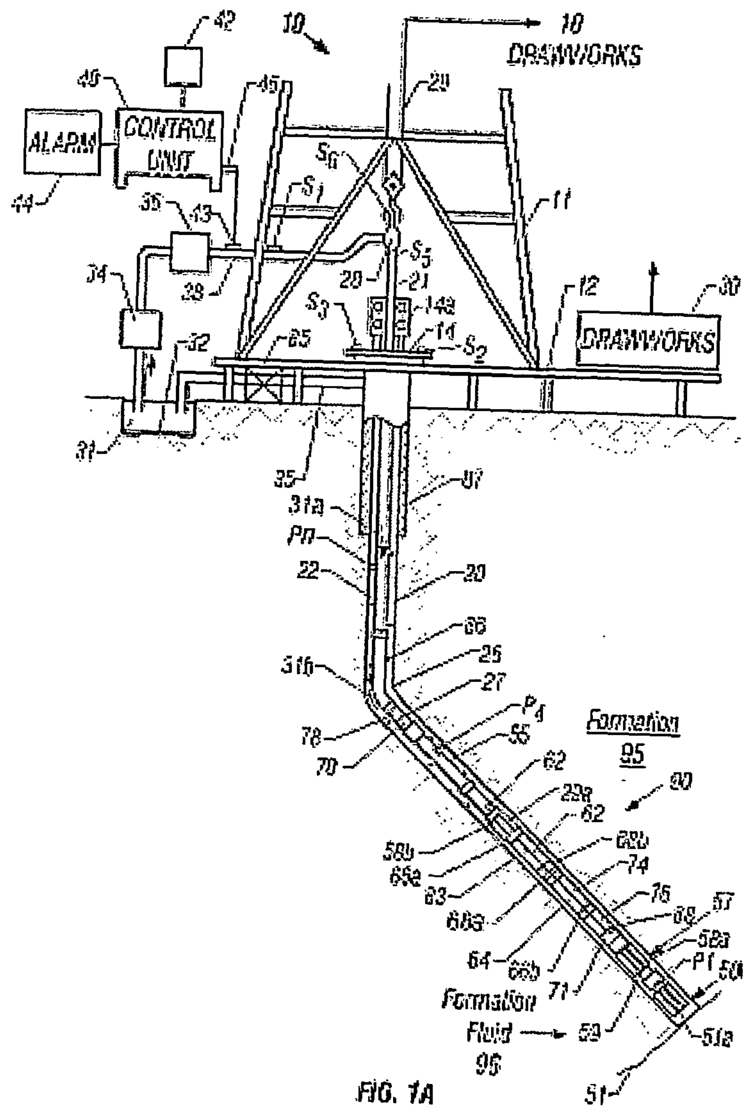
ALARM
CONTROL UNIT
DRAWWORKS
10 DRAWWORKS
Formation 95
Formation Fluid 95

FIG. 1A

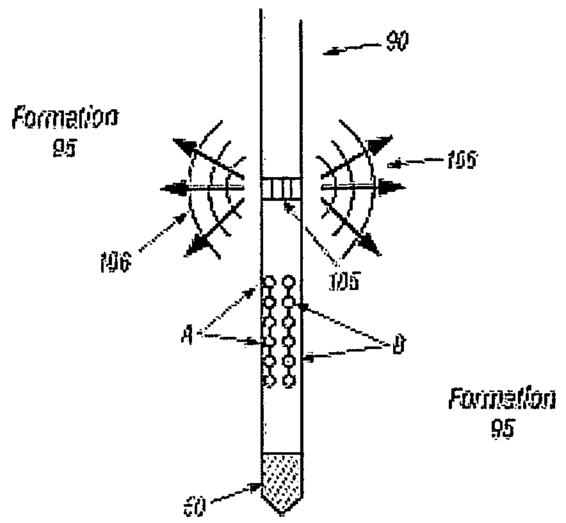
90
Formation
95
106
106
105
A
B
Formation
95
60

FIG. 1B

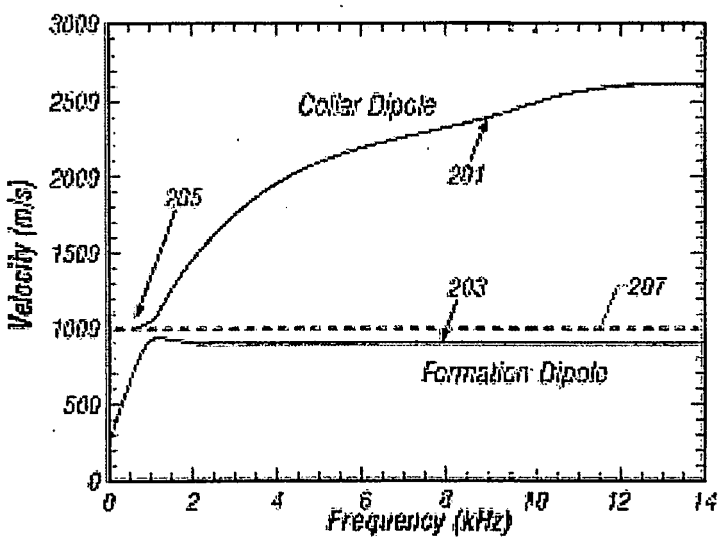
Collar Dipole
201
205
203
207
Formation Dipole
Velocity (m/s)
Frequency (kHz)
0
500
1000
1500
2000
2500
3000
2
4
6
8
10
12
14

FIG. 2

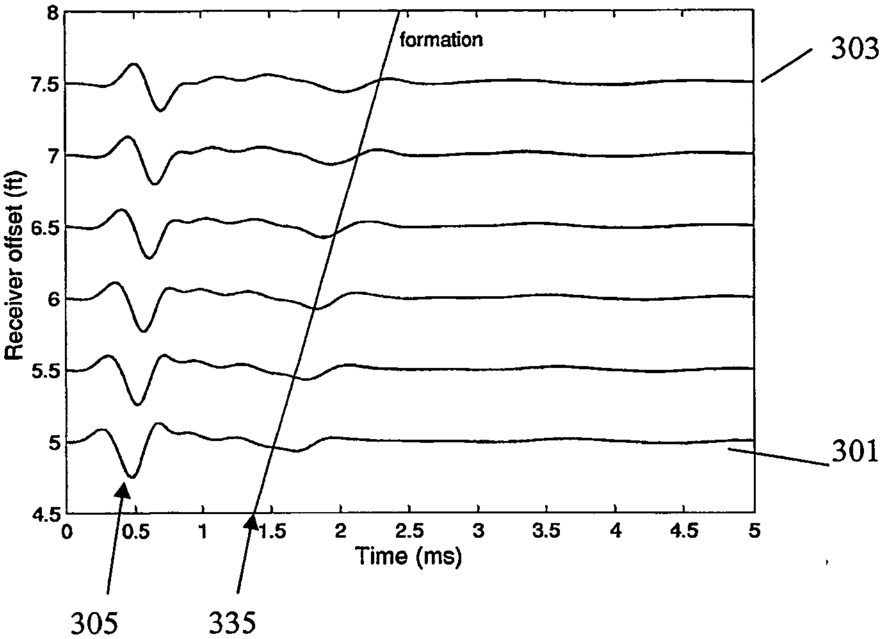
formation
303
301
305
335
Receiver offset (ft)
Time (ms)
8
7.5
7
6.5
6
5.5
5
4.5
0
0.5
1
1.5
2
2.5
3
3.5
4
4.5
5

Figure 3

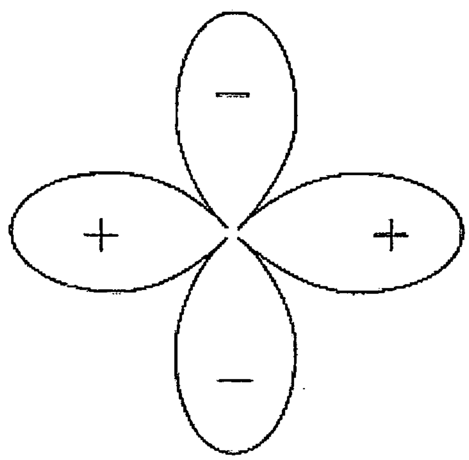
−
+
+
−

FIG. 4A

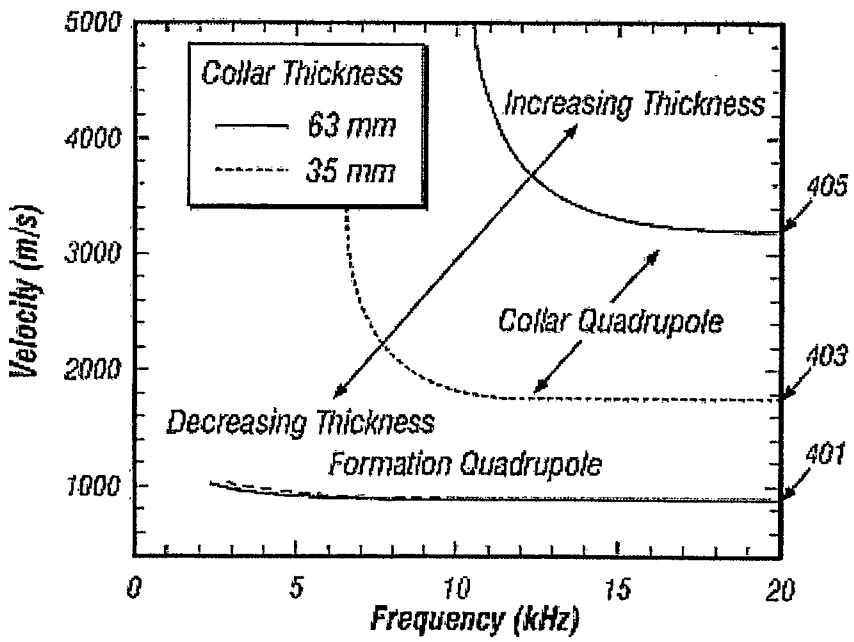
Collar Thickness
63 mm
35 mm
Increasing Thickness
Collar Quadrupole
Decreasing Thickness
Formation Quadrupole
405
403
401
Velocity (m/s)
5000
4000
3000
2000
1000
0
5
10
15
20
Frequency (kHz)

FIG. 4B

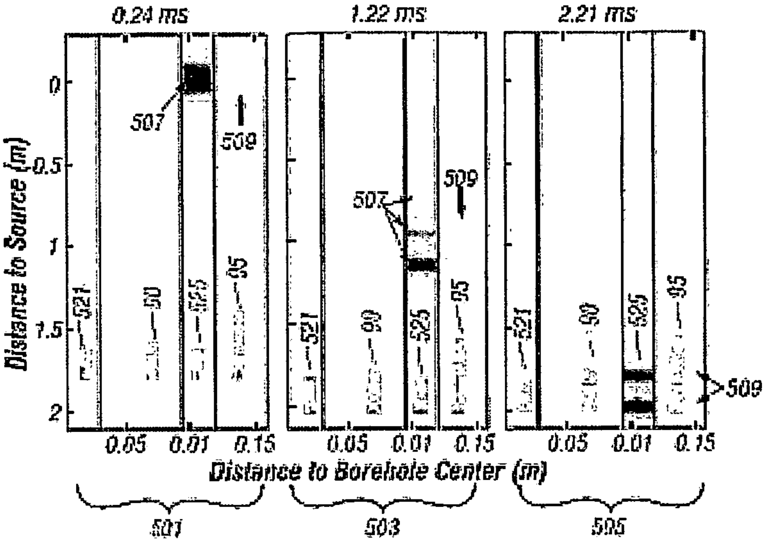
0.24 ms
1.22 ms
2.21 ms
Distance to Source (m)
0
0.5
1
1.5
2
507
509
521
90
525
95
0.05
0.01
0.15
Distance to Borehole Center (m)
501
503
505

FIG. 5A

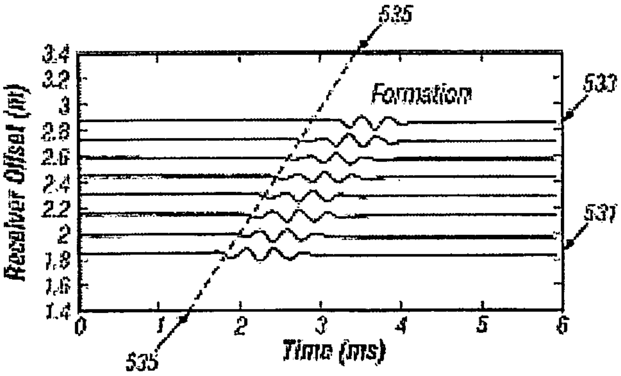
535
Formation
533
531
Receiver Offset (m)
3.4
3.2
3
2.8
2.6
2.4
2.2
2
1.8
1.6
1.4
0
1
2
3
4
5
6
Time (ms)
535

FIG. 5B

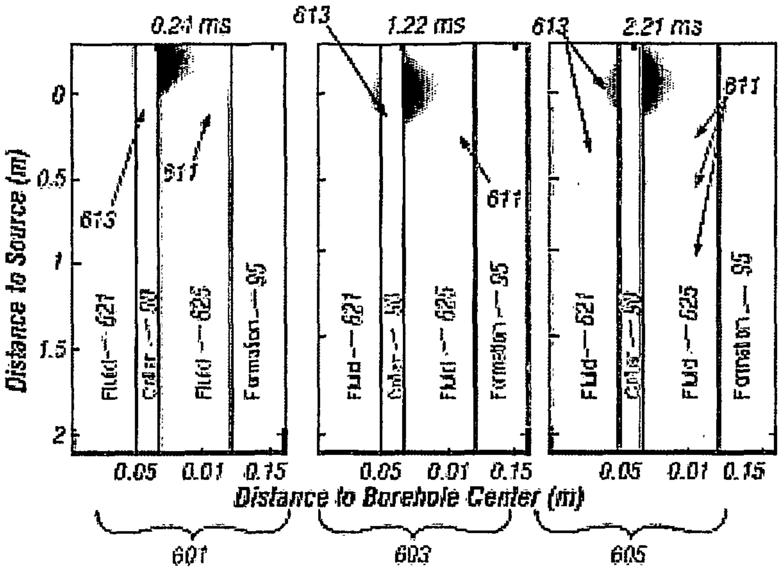
0.24 ms
1.22 ms
2.21 ms
613
611
Distance to Source (m)
Fluid — 621
Collar — 50
Fluid — 625
Formation — 95
Distance to Borehole Center (m)
601
603
605

FIG. 6A

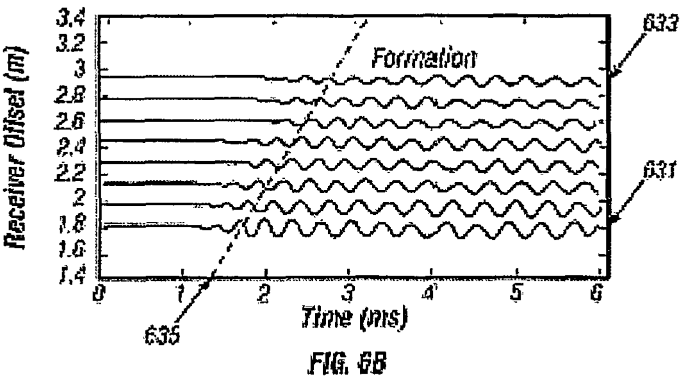
Formation
633
631
635
Receiver Offset (m)
Time (ms)

FIG. 6B

Figure 7

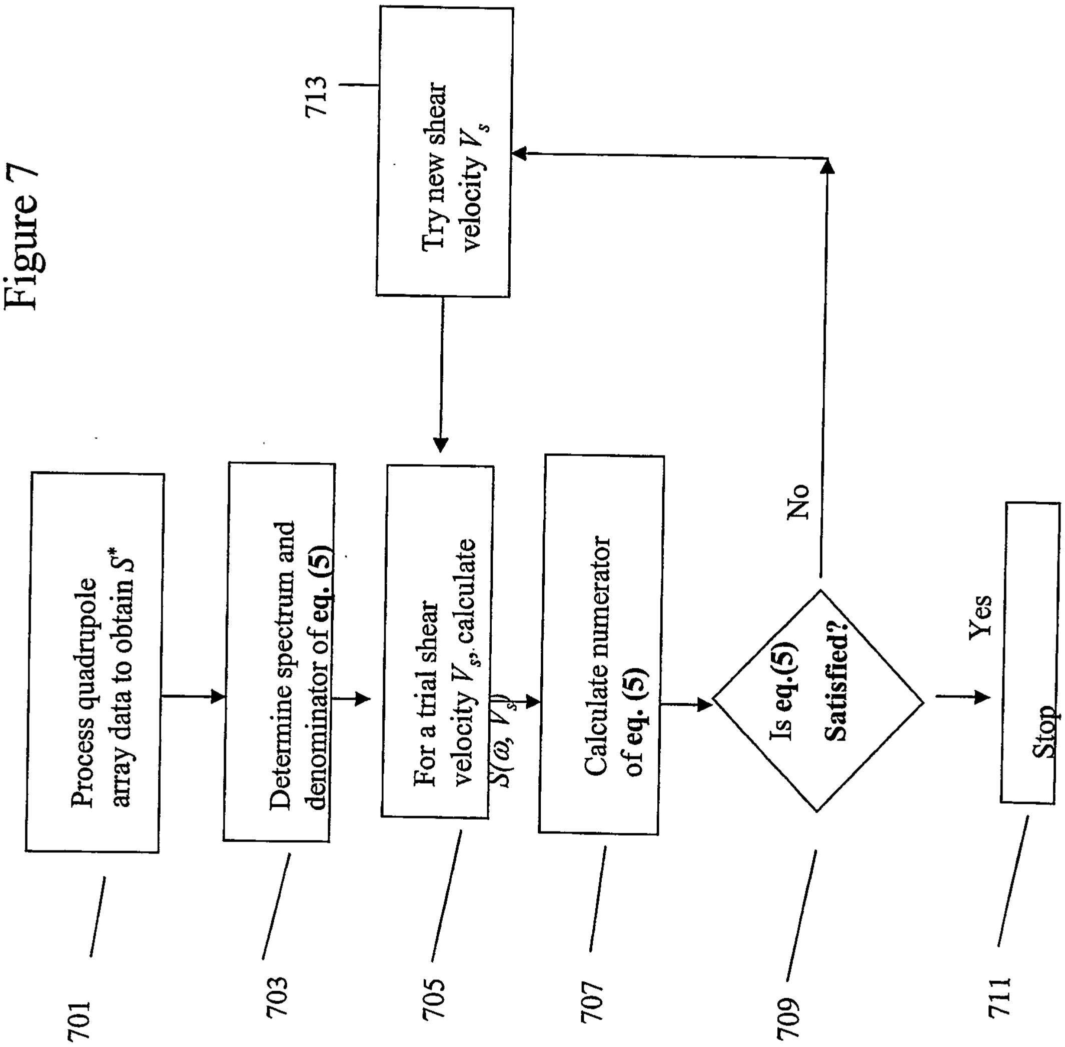
701
Process quadrupole array data to obtain S*
703
Determine spectrum and denominator of eq. (5)
705
For a trial shear velocity $V_s$, calculate $S(\omega, V_s)$
707
Calculate numerator of eq. (5)
709
Is eq.(5) Satisfied?
No
Yes
711
Stop
713
Try new shear velocity $V_s$

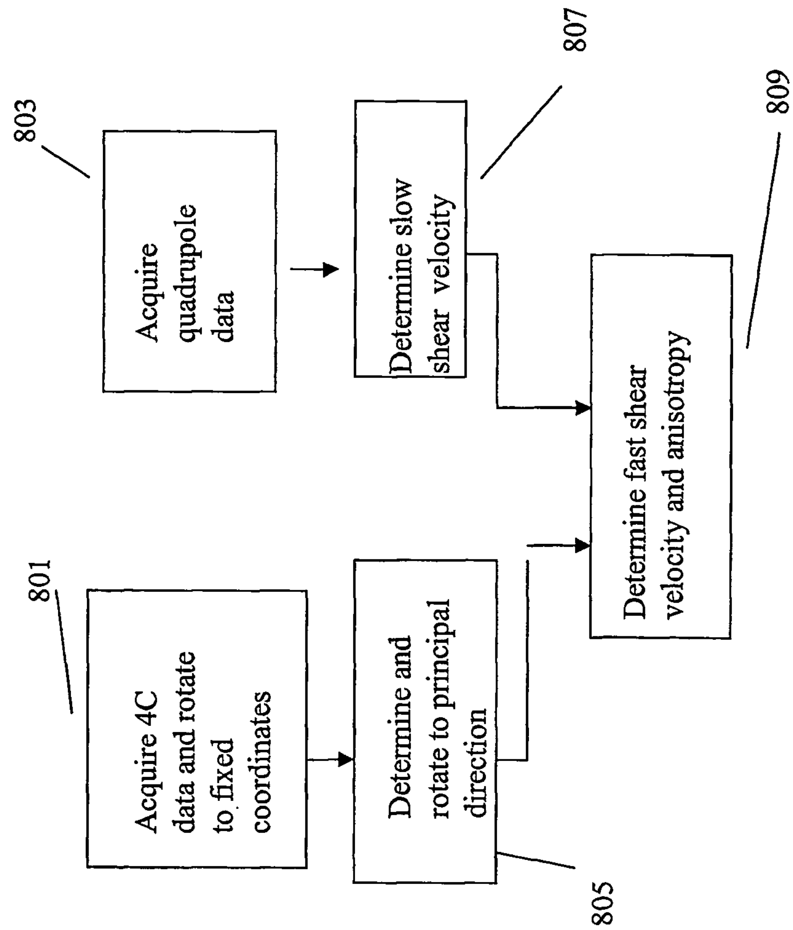
803
Acquire quadrupole data
807
Determine slow shear velocity
809
Determine fast shear velocity and anisotropy
801
Acquire 4C data and rotate to fixed coordinates
Determine and rotate to principal direction
805

Figure 8

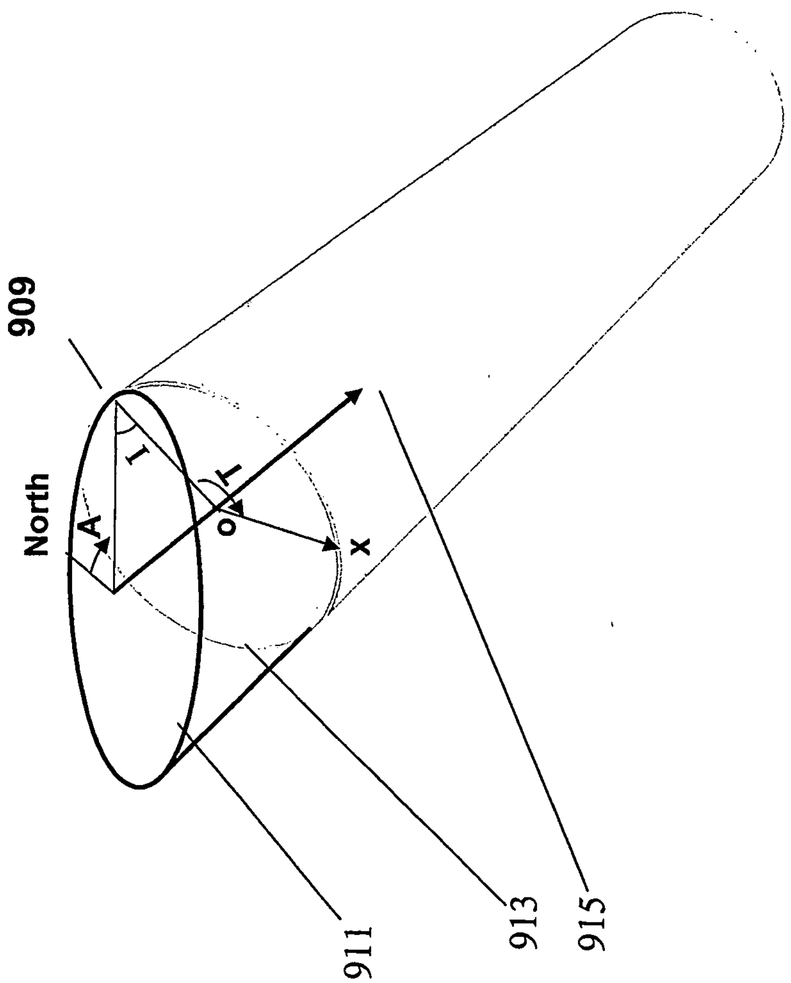


Figure 9

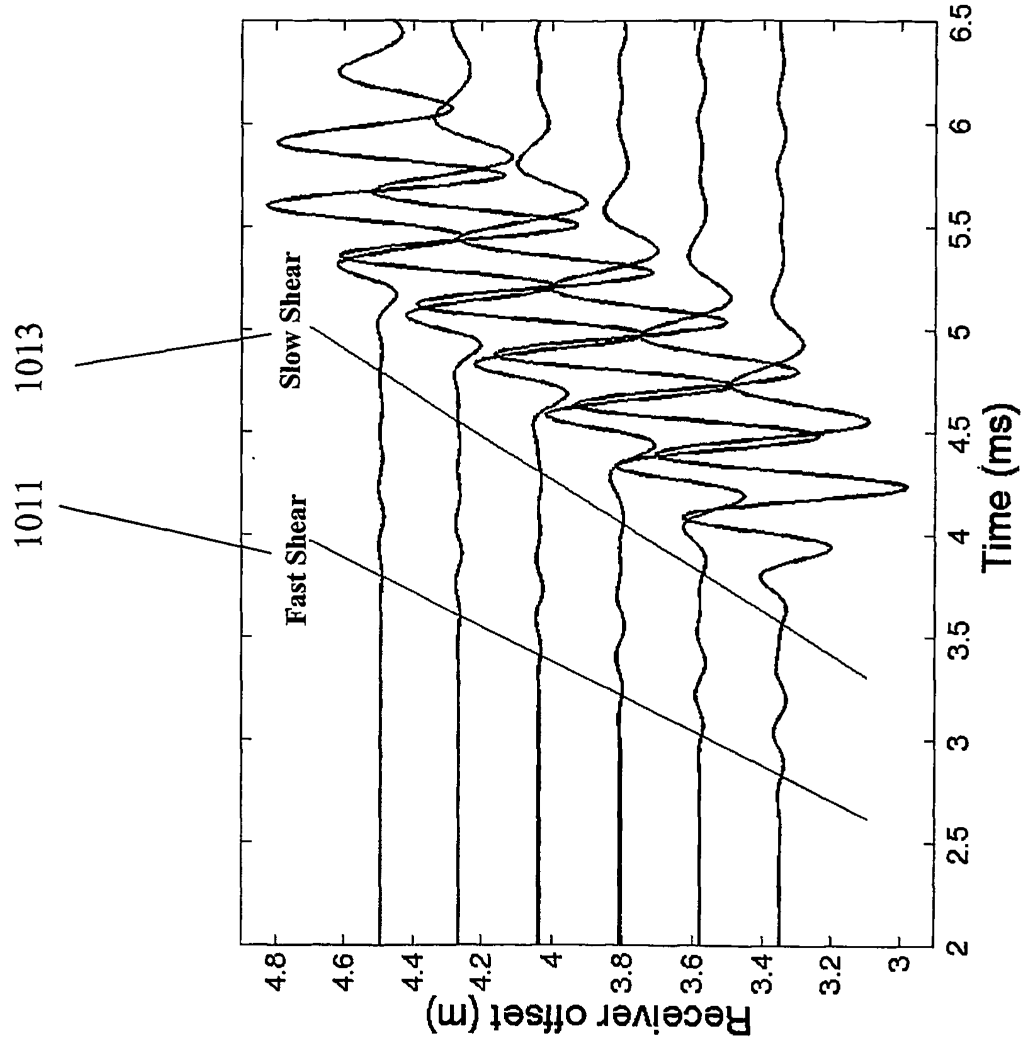
1011
1013
Fast Shear
Slow Shear
Receiver offset (m)
4.8
4.6
4.4
4.2
4
3.8
3.6
3.4
3.2
3
Time (ms)
2
2.5
3
3.5
4
4.5
5
5.5
6
6.5

Figure 10

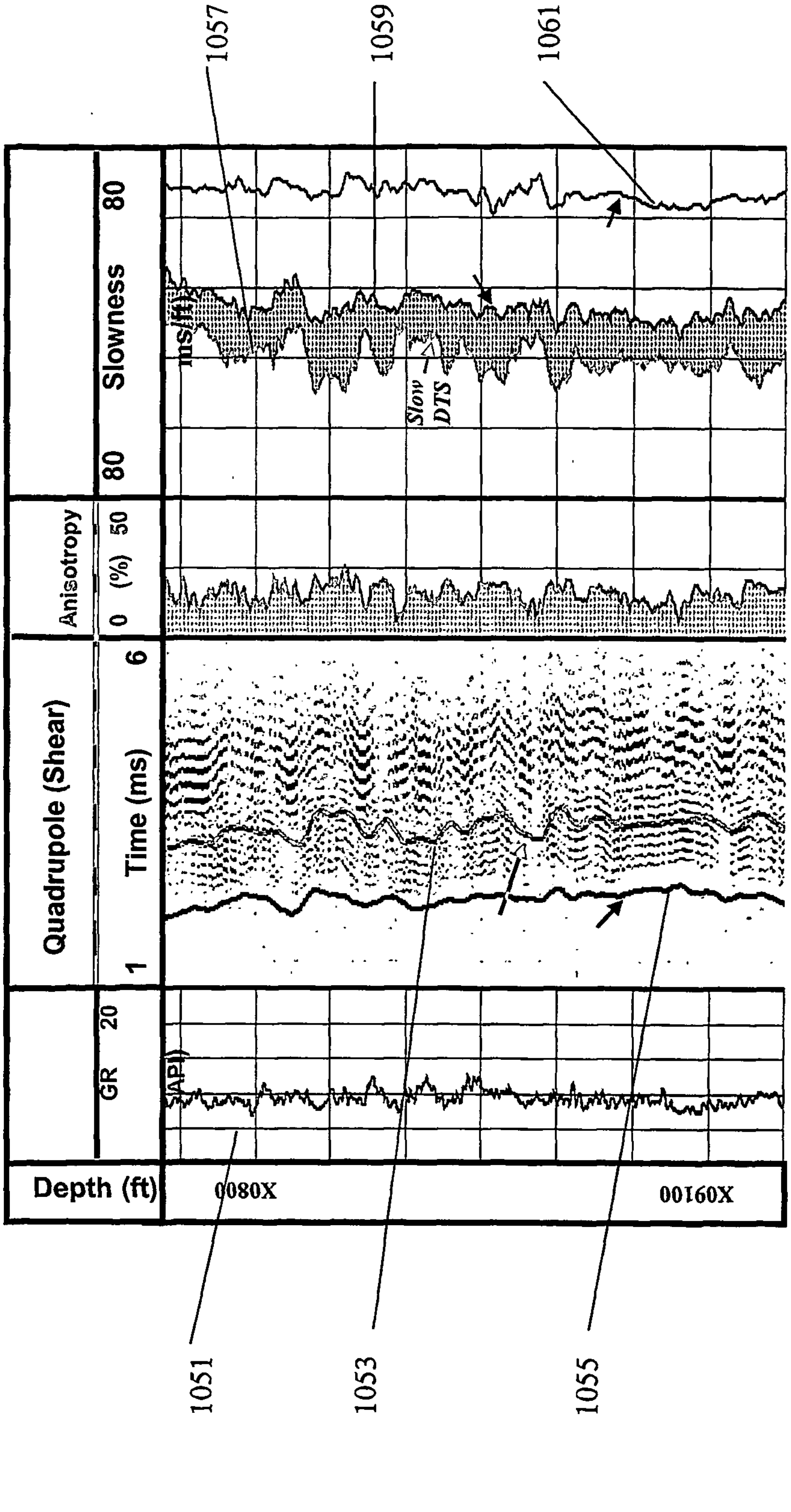
Depth (ft)
0080X
X09100
GR
20
API
Quadrupole (Shear)
Time (ms)
1
6
Anisotropy
0 (%) 50
Slowness
ms/ft
80
80
Slow
DTS
1051
1053
1055
1057
1059
1061

Figure 11

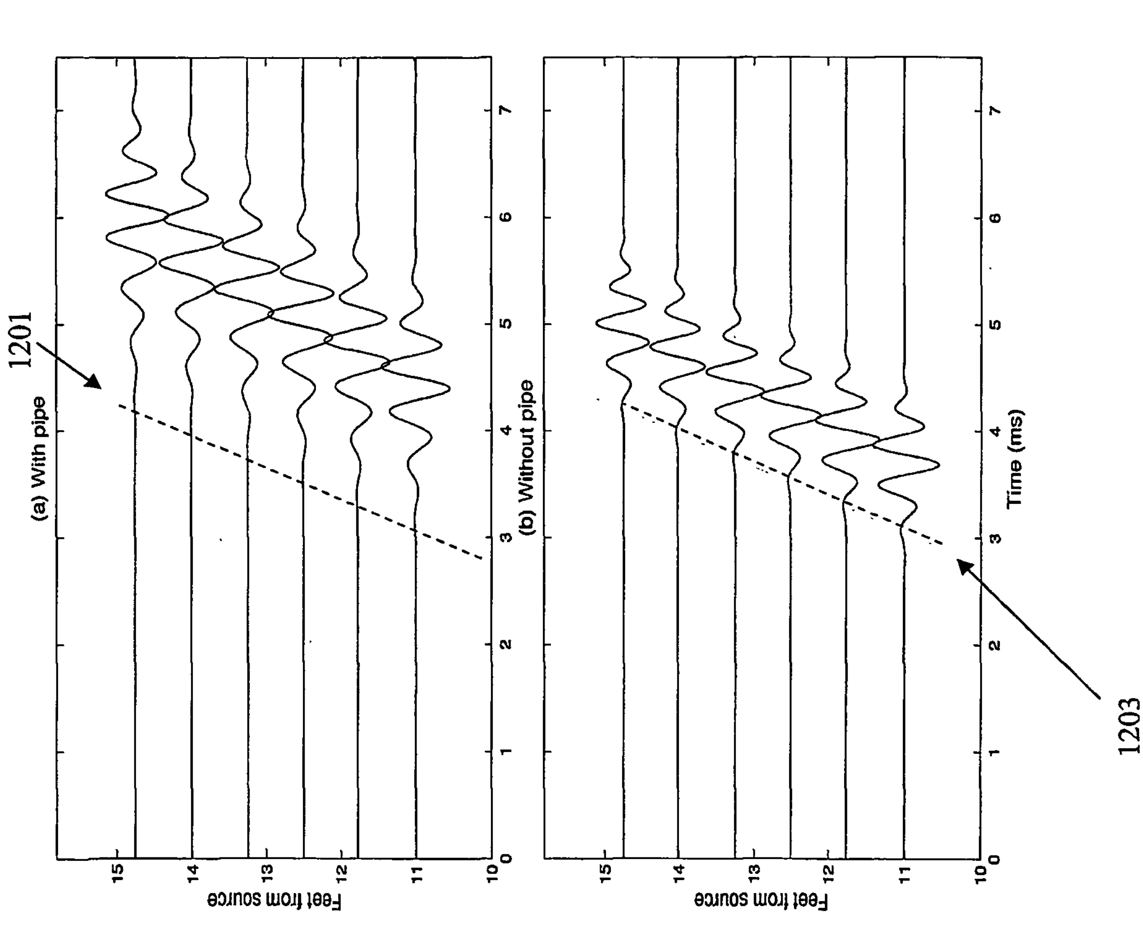

(a) With pipe
(b) Without pipe
1201
1203
Feet from source
Time (ms)
15
14
13
12
11
10
0
1
2
3
4
5
6
7


Figure 12

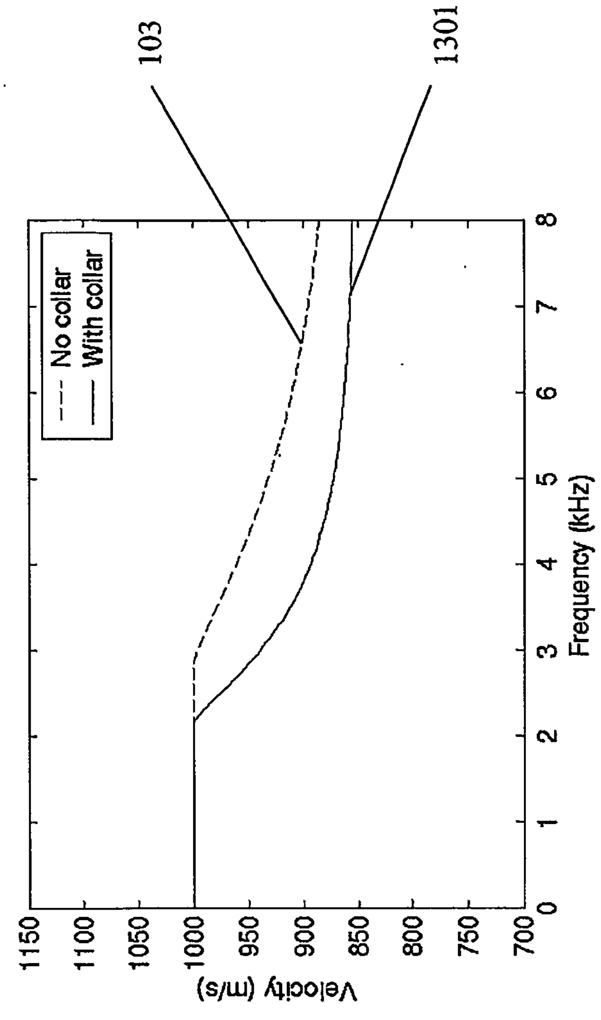
103
1301
No collar
With collar
Velocity (m/s)
1150
1100
1050
1000
950
900
850
800
750
700
0
1
2
3
4
5
6
7
8
Frequency (kHz)

Figure 13

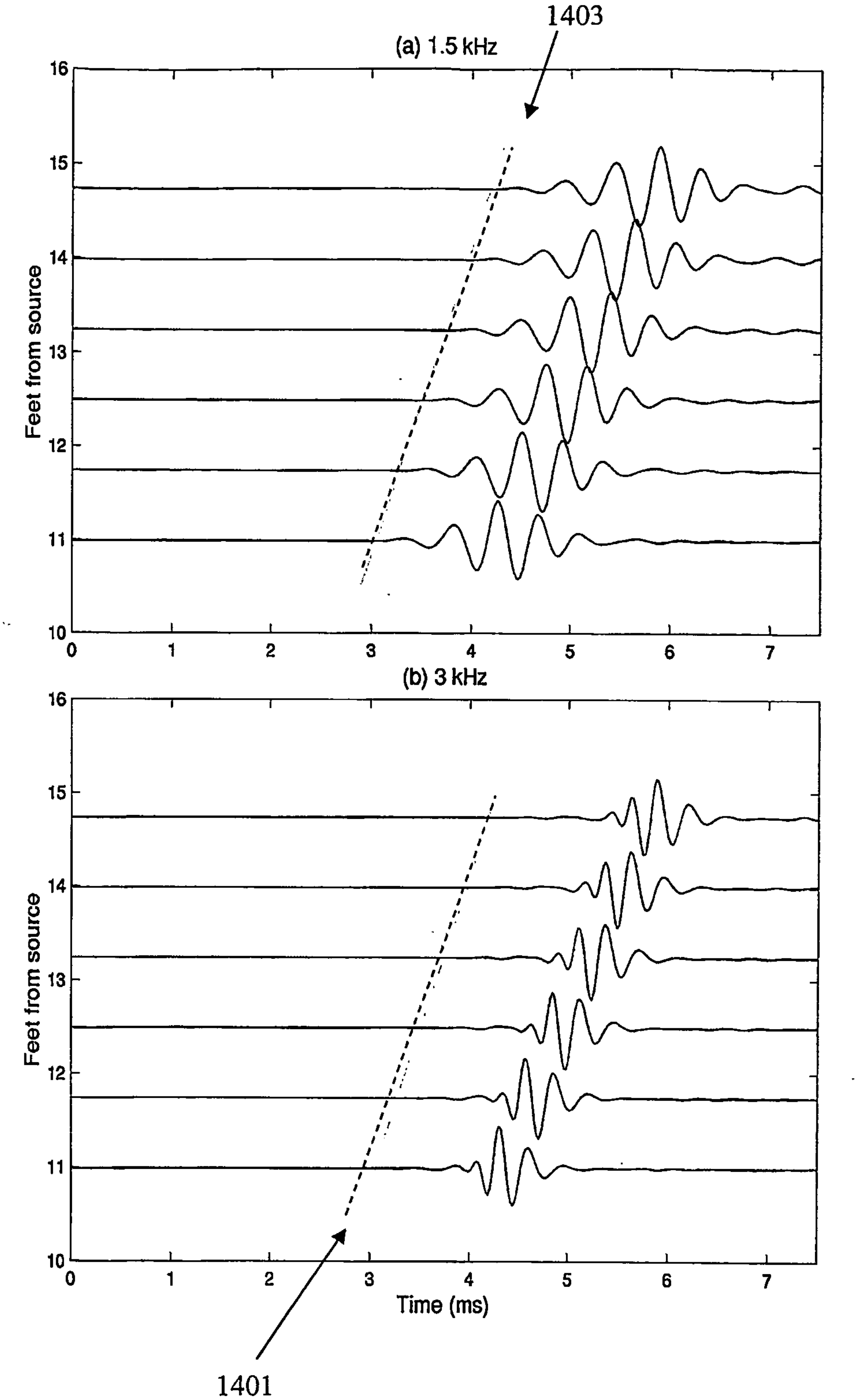
1403
(a) 1.5 kHz
16
15
14
13
12
11
10
Feet from source
0
1
2
3
4
5
6
7
(b) 3 kHz
Time (ms)
1401

Figure 14

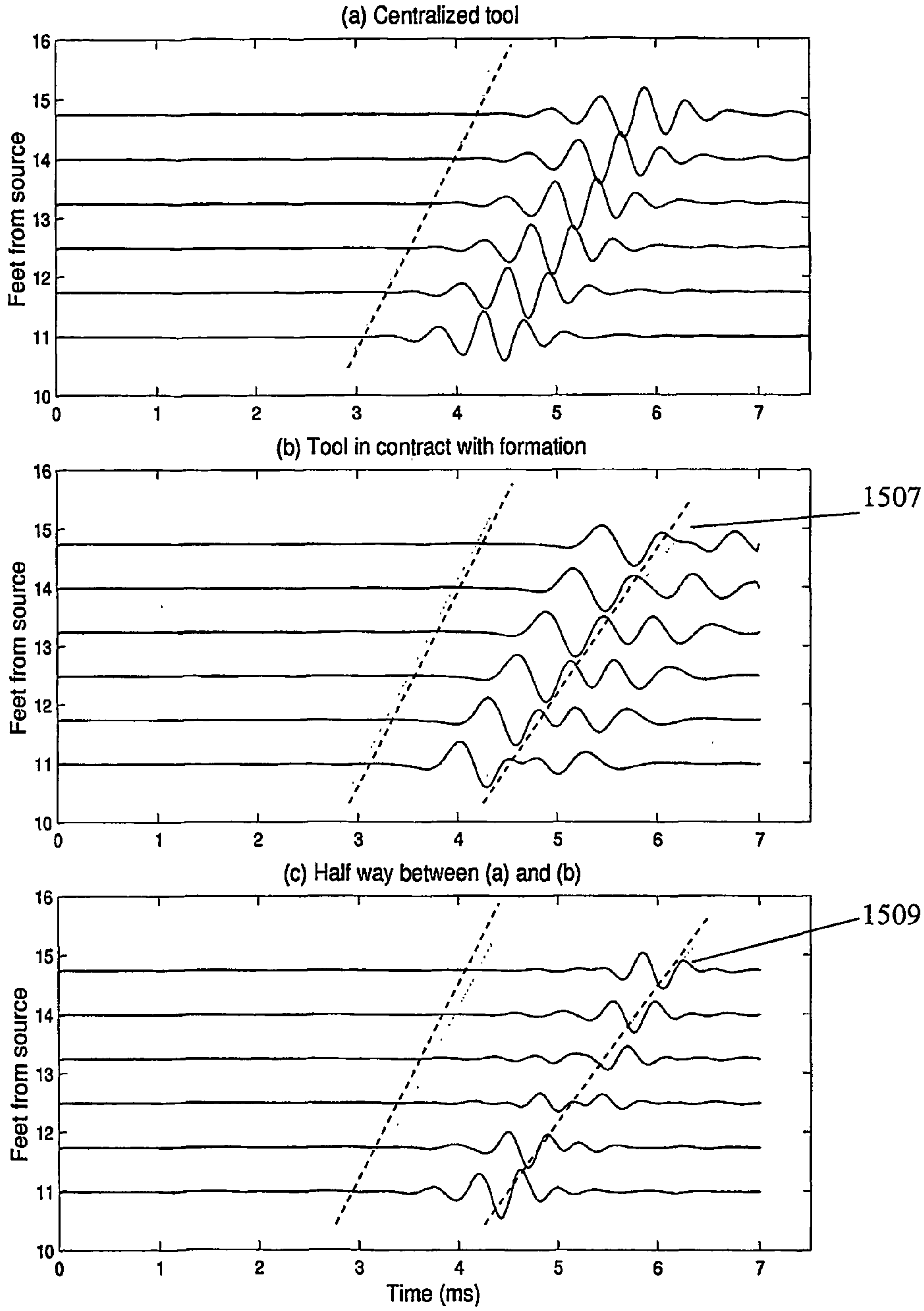
(a) Centralized tool
Feet from source
16
15
14
13
12
11
10
0
1
2
3
4
5
6
7
(b) Tool in contract with formation
1507
(c) Half way between (a) and (b)
1509
Time (ms)

Figure 15

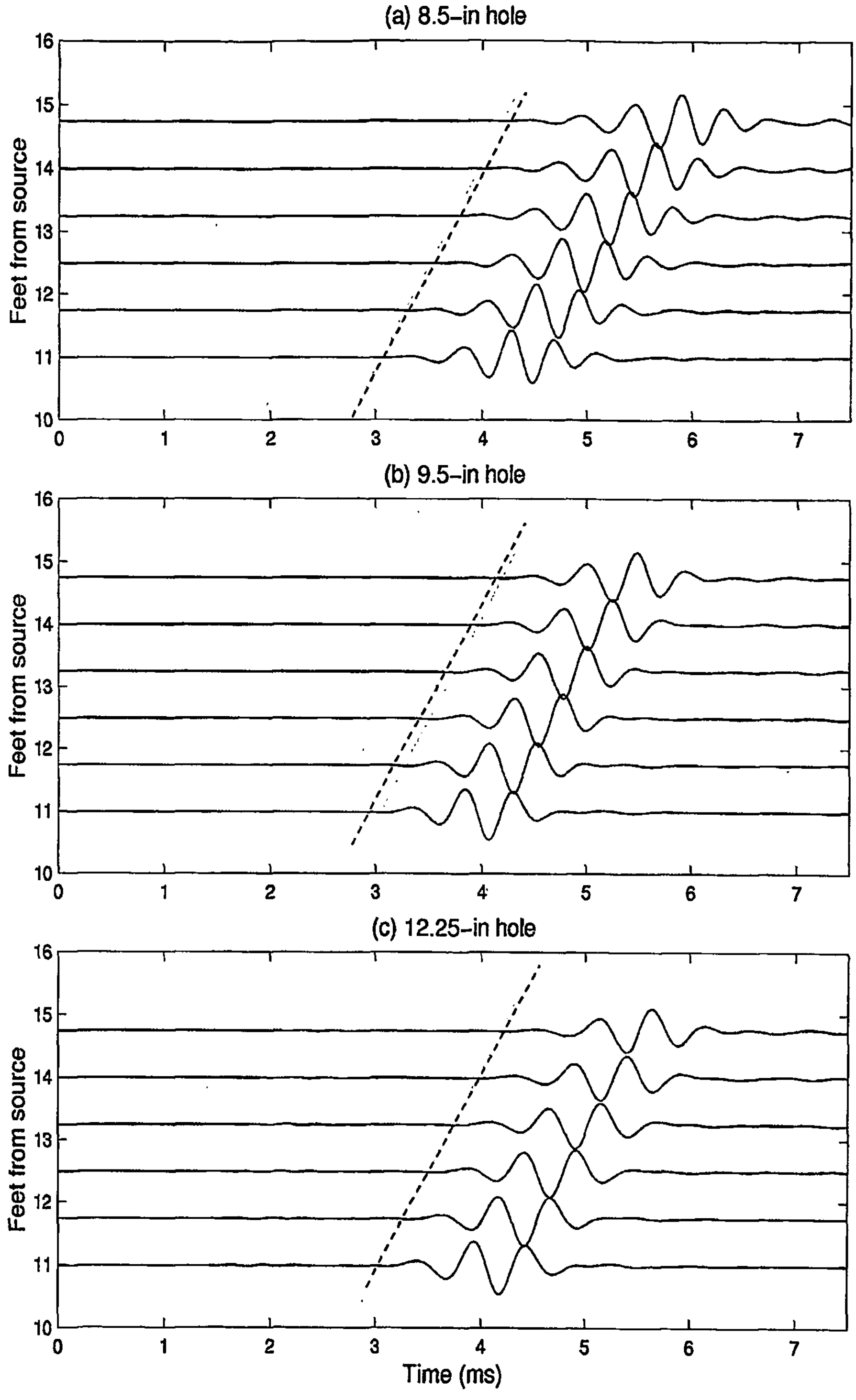
(a) 8.5-in hole
Feet from source
16
15
14
13
12
11
10
0
1
2
3
4
5
6
7
(b) 9.5-in hole
Feet from source
16
15
14
13
12
11
10
0
1
2
3
4
5
6
7
(c) 12.25-in hole
Feet from source
16
15
14
13
12
11
10
0
1
2
3
4
5
6
7
Time (ms)

Figure 16

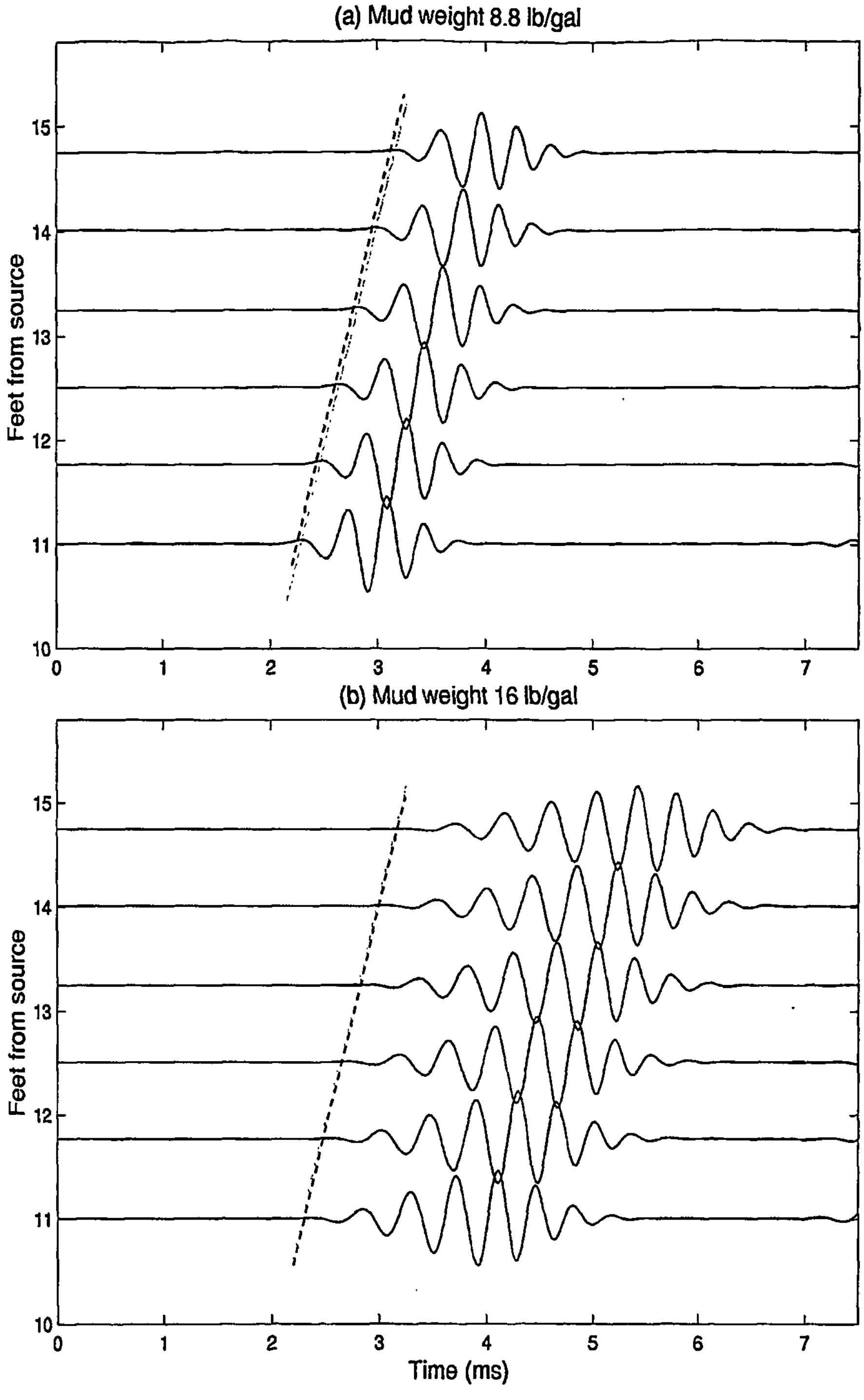
(a) Mud weight 8.8 lb/gal
Feet from source
15
14
13
12
11
10
0
1
2
3
4
5
6
7
(b) Mud weight 16 lb/gal
Feet from source
Time (ms)

Figure 17

(a)

(b)

(c)

(d)

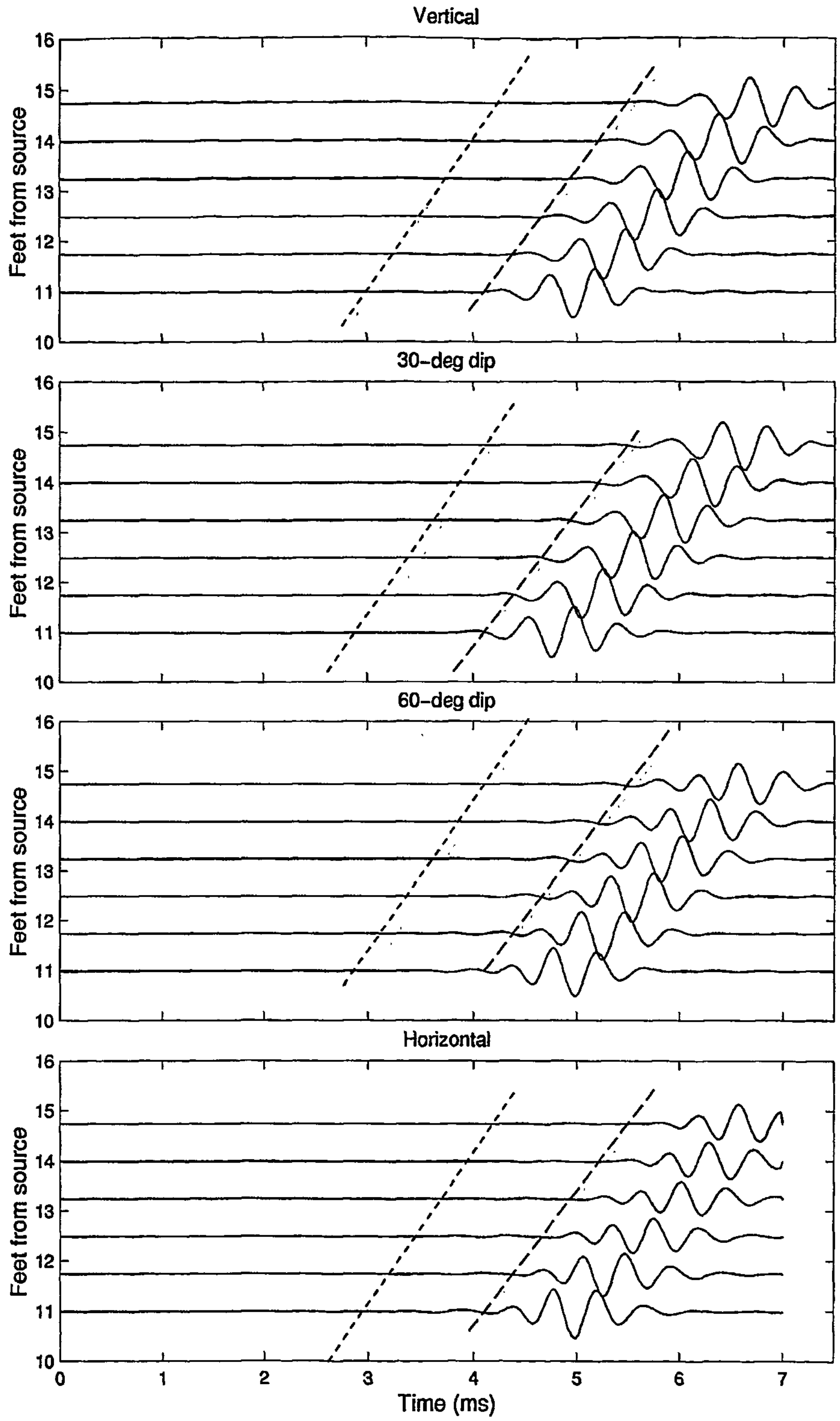


Figure 18

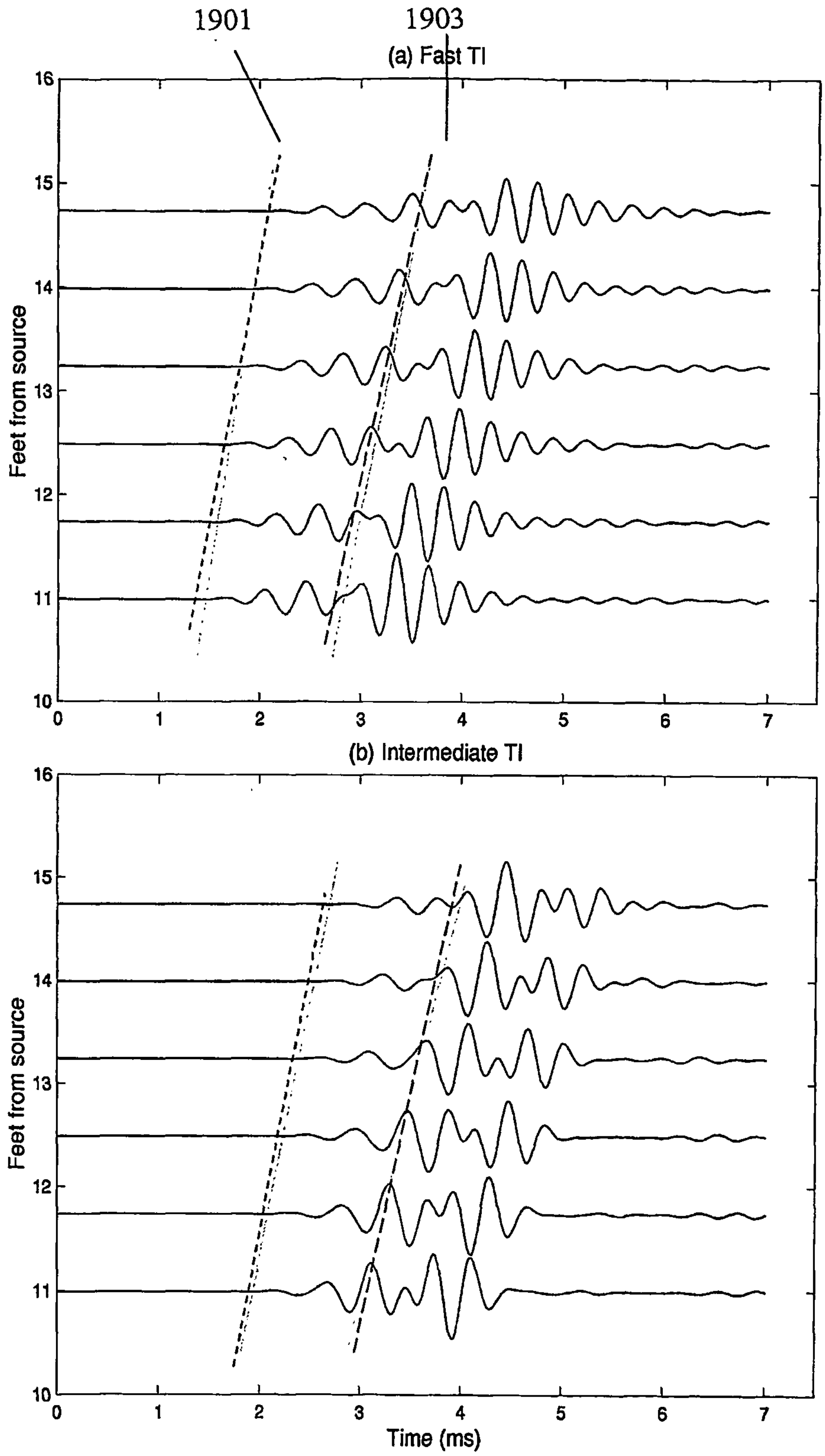
1901
1903
(a) Fast TI
Feet from source
16
15
14
13
12
11
10
0
1
2
3
4
5
6
7
(b) Intermediate TI
Time (ms)

Figure 19

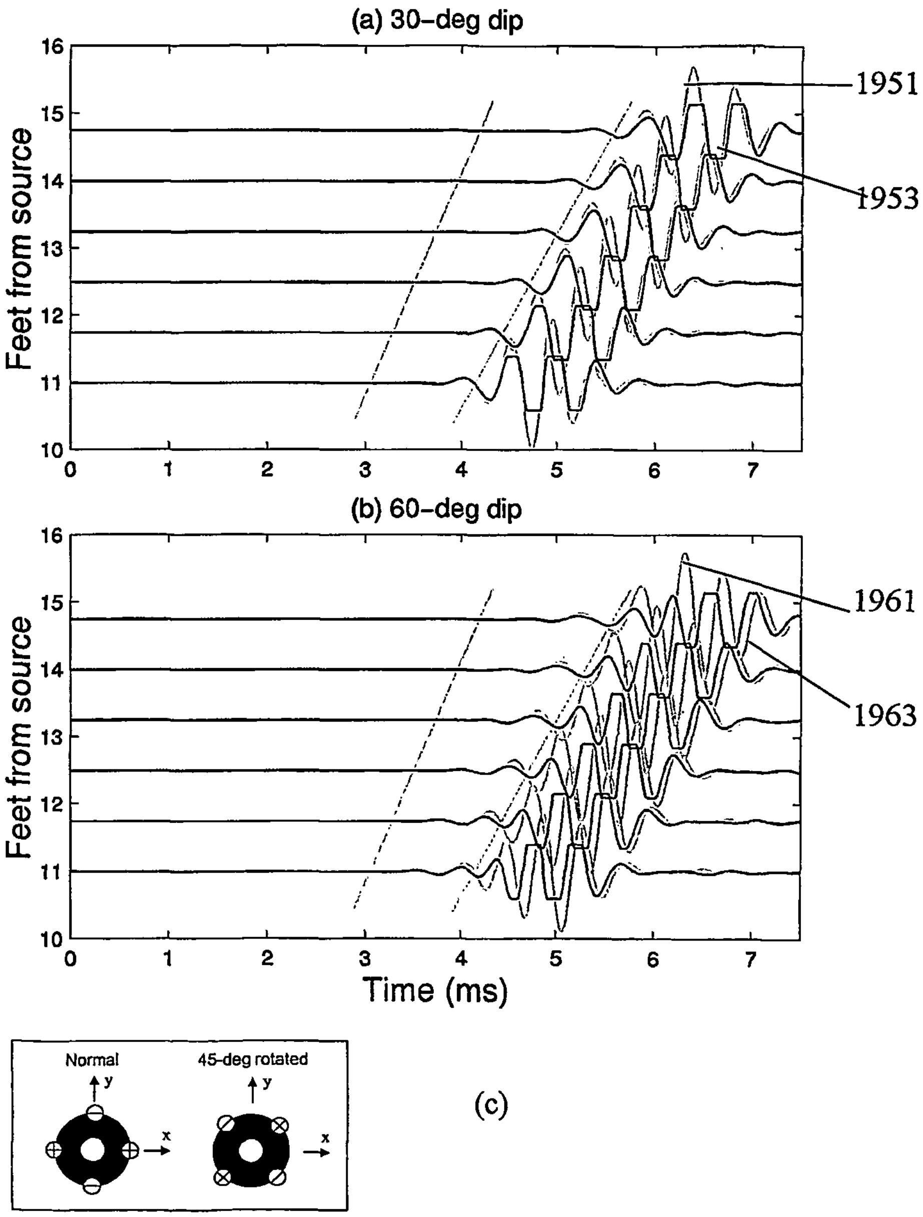
(a) 30-deg dip
Feet from source
1951
1953
(b) 60-deg dip
Feet from source
1961
1963
Time (ms)
Normal
45-deg rotated
y
x
(c)

Figure 20

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5027331 A, Winbow
- US 20030002388 A1
- US 10045263 B, Tang
- US 4832148 A, Becker
- US 5278805 A
- US 6023443 A
- US 6427124 A, Dubinsky
- US 298706 A, Kurkoski


### Non-patent literature cited in the description


- **Chert.** *Geophysics,* May 1989, vol. 54 (5), 590-597
- **Sinha et al.** Borehole flexural models in anisotropic formations. *Geophysics,* July 1994, vol. 59 (7), 1037-1052
- **Tang et al.** *SEG Int'l Exposition and 72nd Annual Meeting,* 06 October 2002
- **Tang et al.** Shear-Velocity Measurement in the Logging-While-Drilling Environment : Modeling and Field Evaluations. *Petrophysics,* March 2003, vol. 44 (2), 79-90
- **Kurkjian ; Chang.** Acoustic multipole sources in fluid-filled boreholes. *Geophysics,* January 1986, vol. 51 (1), 148-163
- **Wang et al.** Using Multicomponent Induction Resistivity and Cross-Dipole Acoustic Logs to Jointly Characterize Drilling - Induced Fractures. *Society of Professional Well Log Analysts, 43rd Annual Logging Symposium,* 02 June 2002